(19) Europäisches Patentamt
European Patent Office
Office européen des brevets

(11) **EP 4 009 102 B1**

(12) **EUROPEAN PATENT SPECIFICATION**

(45) Date of publication and mention
of the grant of the patent:
**26.03.2025 Bulletin 2025/13**

(21) Application number: **20849016.9**

(22) Date of filing: **17.07.2020**

(51) International Patent Classification (IPC):
**G03B 30/00** *(2021.01)*     **G03B 3/10** *(2021.01)*
**G02B 7/08** *(2021.01)*     **G03B 17/55** *(2021.01)*
**G02B 7/02** *(2021.01)*     **G02B 7/09** *(2021.01)*
**G02B 27/64** *(2006.01)*     **G03B 13/36** *(2021.01)*
**H02K 41/035** *(2006.01)*     **H04N 23/55** *(2023.01)*
**H04N 23/57** *(2023.01)*

(52) Cooperative Patent Classification (CPC):
**G02B 7/08; G02B 7/028; G02B 7/09; G02B 27/646;
G03B 3/10; G03B 13/36; G03B 17/55; G03B 30/00;
H02K 41/0356; H04N 23/55; H04N 23/57;**
G03B 2205/0069; H04N 23/67

(86) International application number:
**PCT/JP2020/027973**

(87) International publication number:
**WO 2021/024767 (11.02.2021 Gazette 2021/06)**

(54) **IMAGING DEVICE AND IMAGING DEVICE CONTROL METHOD**

BILDGEBUNGSVORRICHTUNG UND
BILDGEBUNGSVORRICHTUNGSTEUERUNGSVERFAHREN

DISPOSITIF D'IMAGERIE ET PROCÉDÉ DE COMMANDE DE DISPOSITIF D'IMAGERIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2019 JP 2019143346**

(43) Date of publication of application:
**08.06.2022 Bulletin 2022/23**

(73) Proprietor: **Sony Semiconductor Solutions
Corporation
Atsugi-shi Kanagawa 243-0014 (JP)**

(72) Inventors:
• **KIMURA, Katsuji
Atsugi-shi Kanagawa 243-0014 (JP)**

• **URANO, Yuki
Atsugi-shi Kanagawa 243-0014 (JP)**
• **BOGODA, Indika
Atsugi-shi, Kanagawa 243-0014 (JP)**

(74) Representative: **Müller Hoffmann & Partner
Patentanwälte mbB
St.-Martin-Straße 58
81541 München (DE)**

(56) References cited:
WO-A1-2012/114770     JP-A- 2003 029 316
JP-A- 2018 142 806     KR-B1- 101 889 058
US-A1- 2013 038 781     US-A1- 2018 252 893
US-A1- 2019 190 412     US-A1- 2019 190 412

**Description**

Field

The present disclosure relates to an imaging device and a method for controlling an imaging device.

Background

In recent years, a pixel-density increase, performance enhancement, and size reduction have been required for functions as an imaging device mounted on a digital still camera or a multifunctional mobile phone terminal having an imaging function. As one of techniques for the performance enhancement of the functions as the imaging device, an autofocus (AF) technique is known in which a focus of a lens is constantly detected to move the lens to a position where subject light is collected at a high speed.

Patent Literature 1 discloses a technology in which an actuator is driven using a pulse width modulation (PWM) signal, and a position of a lens can be detected using an induced electromotive force generated by the PWM signal.

US 2019/190412 A1 discloses an actuator using a voice coil motor (VCM) method that includes a coil configured to face a magnetic member disposed on a lateral surface of a lens carrier, and be spaced apart from the magnetic member, a driving circuit configured to supply a composite current including a driving current and a position detection current to the coil based on a composite voltage input to the driving circuit, and an impedance/digital conversion circuit configured to convert an alternating current (AC) voltage signal including a specific frequency component acquired at opposite ends of the coil via a demodulation scheme, extract a low-frequency signal having an inductance component of the coil, and detect a position signal based on the low-frequency signal.

US 2018/252893 A1 discloses a housing, a bobbin for mounting a lens, the bobbin being accommodated inside the housing, a first coil disposed on an outer circumferential surface of the bobbin, a magnet disposed in the housing, and a second coil disposed in the housing, wherein the second coil comprises a third coil and a fourth coil, a first signal is applied to the first coil, a second signal is applied to the fourth coil, and an induction voltage is generated in the second coil by a mutual induction operation between the first coil and the second coil.

Citation List

Patent Literature

Patent Literature 1: JP 2018-189703 A

Summary

Technical Problem

An imaging element provided in an imaging device and an actuator that drives a lens generate heat during the operation, and a temperature variation occurs in the imaging device due to the heat generation. In addition, the temperature variation in the imaging device also occurs due to disturbance. Due to the influence of this temperature variation, characteristics of a circuit that drives the actuator and a circuit that detects the position of the lens driven by the actuator change. This change causes a decrease in accuracy of the detection of the lens position, and accordingly, it becomes difficult to appropriately control the lens position.

An object of the present disclosure is to provide an imaging device capable of controlling a lens position with high accuracy and a method for controlling an imaging device. Solution to Problem

The problem described above is solved by the claimed subject-matter, which defines the present invention. Embodiments not covered by the claimed subject-matter do not form part of the invention.

Brief Description of Drawings

FIG. 1 is a diagram illustrating a configuration of an example of an imaging device applicable to a first embodiment.
FIG. 2 is a structural diagram of an example for describing a structure of the imaging device according to the first embodiment.
FIG. 3 is a perspective view schematically illustrating examples of a spacer and a position detection coil applicable to the first embodiment.

FIG. 4 is a diagram for describing a magnetic field generated by an AF coil in response to a PWM waveform drive signal and an induced electromotive force generated by the magnetic field.

FIG. 5 is a graph illustrating an example of a relationship between a lens position and an induced electromotive force generated by the position detection coil according to the lens position, which is applicable to the first embodiment.

FIG. 6 is a graph illustrating examples of temporal changes in temperatures of the AF coil and the position detection coil.

FIG. 7 is a graph schematically illustrating a change of a waveform due to an induced electromotive force detected by the position detection coil depending on a temperature of the position detection coil when a rectangular wave by a PWM signal is input to the AF coil.

FIG. 8 is a block diagram illustrating a configuration of an example of a position detection and control unit that performs detection of a lens position and control according to the first embodiment.

FIG. 9 is a circuit diagram illustrating a configuration of an example for detecting a resistance value $R_{act}$ of the AF coil, which is applicable to the first embodiment.

FIG. 10 is a circuit diagram illustrating a configuration of an example for detecting a resistance value $R_{pos}$ of the position detection coil, which is applicable to the first embodiment.

FIG. 11 is a flowchart illustrating an example of AF lens drive control processing by the position detection and control unit according to the first embodiment.

FIG. 12 is a diagram illustrating a configuration of an example of an imaging device according to a first modification of the first embodiment.

FIG. 13A is a diagram illustrating an example of a configuration of the position detection coil in a circuit board having a two-layer structure applicable to the first embodiment.

FIG. 13B is a diagram illustrating an example in which the circuit board has a three-layer structure, which is applicable to the first embodiment.

FIG. 14 is a diagram illustrating an example of an imaging device by flip-chip mounting according to a second modification of the first embodiment.

FIG. 15 is a diagram illustrating a configuration of an example of an imaging device using an imaging element having a CSP structure according to a third modification of the first embodiment.

FIG. 16 is a diagram illustrating a configuration of an example of an imaging device according to a fourth modification of the first embodiment.

FIG. 17A is a graph illustrating an example of a simulation result of defocus characteristics of an MTF for a lens.

FIG. 17B is a graph illustrating an example of a simulation result of the defocus characteristics of the MTF for the lens.

FIG. 18 is a graph illustrating an example of a simulation result of a relationship between a focus shift amount of the lens and a temperature of the lens in a case where the temperature is set with 25°C as a reference.

FIG. 19 is a block diagram illustrating a configuration of an example of a position detection and control unit that performs detection of a lens position and control according to a second embodiment.

FIG. 20 is a block diagram illustrating a configuration of an example of a terminal device as an electronic device applicable to a third embodiment.

FIG. 21 is a diagram illustrating usage examples of an imaging device to which a technology of the present disclosure is applied.

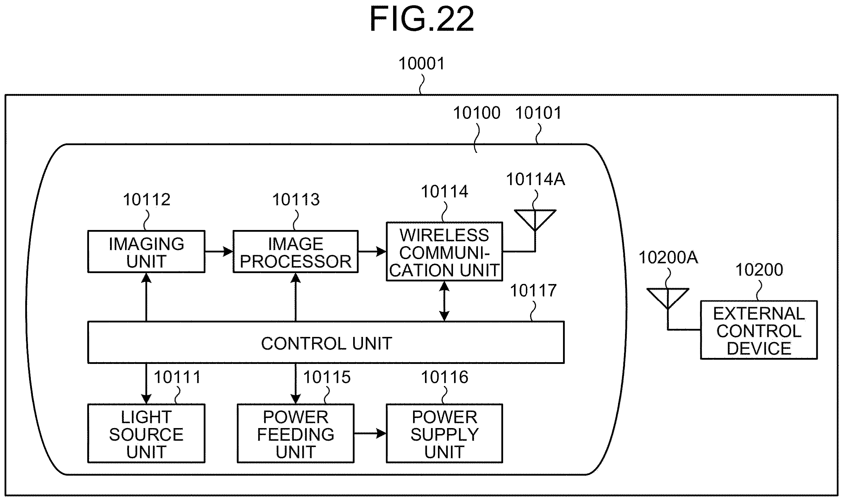

FIG. 22 is a block diagram illustrating an example of a schematic configuration of an in-vivo information acquisition system.

FIG. 23 is a diagram illustrating an example of a schematic configuration of an endoscopic surgery system.

FIG. 24 is a block diagram illustrating an example of a functional configuration of a camera head and a CCU.

FIG. 25 is a block diagram illustrating an example of a schematic configuration of a vehicle control system.

FIG. 26 is an explanatory diagram illustrating an example of an installation position of an external vehicle information detection unit and an imaging unit.

Description of Embodiments

Hereinafter, embodiments of the present disclosure will be described in detail with reference to the drawings. Note that the same portions are denoted by the same reference signs in the following embodiments, and a repetitive description thereof will be omitted.

Hereinafter, the embodiments of the present disclosure will be described in the following order.

1. First Embodiment

    1-1. Configuration Applicable to First Embodiment
    1-2. Regarding Detection of Induced Electromotive Force

1-3. Position Detection according to First Embodiment

1-4. Principle of Position Detection according to First Embodiment

1-5. Specific Configuration Example according to First Embodiment

1-6. More Specific Configuration Example of Resistance Detection of Each Coil

1-7. More Specific Example of Lens Drive Control according to First Embodiment

1(1). First Modification of First Embodiment

1(2). Second Modification of First Embodiment

1(3). Third Modification of First Embodiment

1(4). Fourth Modification of First Embodiment

2. Second Embodiment

2-1. Schematic Description of Principle of Second Embodiment

2-2. Configuration Example according to Second Embodiment

3. Third Embodiment

4. Fourth Embodiment

5. Additional Application Examples of Technology according to Present Disclosure

5-1. Application Example to In-Vivo Information Acquisition System

5-2. Application Example to Endoscopic Surgery System

5-3. Application Example to Moving Object

1. First Embodiment

1-1. Configuration Applicable to First Embodiment

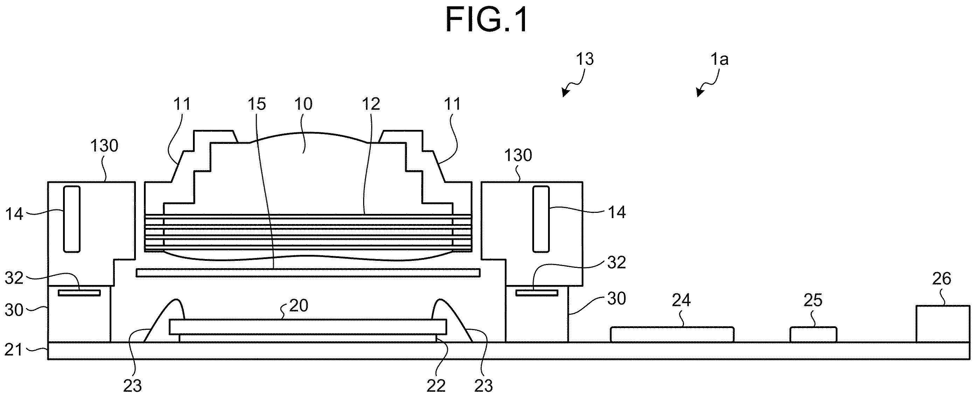

A first embodiment of the present disclosure will be described. First, a configuration applicable to the first embodiment of the present disclosure will be described. FIG. 1 is a diagram illustrating a configuration of an example of an imaging device applicable to the first embodiment. In FIG. 1, an imaging device 1a includes a lens 10 that collects light from a subject, and an imaging element 20 that is irradiated with the light collected by the lens 10 and outputs a pixel signal according to the irradiated light. As the imaging element 20, for example, a charge coupled device (CCD) sensor or a complementary metal oxide semiconductor (CMOS) image sensor can be applied.

An application of the imaging device 1a is not particularly limited, but the imaging device 1a can be applied to, for example, an in-vehicle drive recorder. Without being limited thereto, and the imaging device 1a can be applied to an information processing device easily configured to be carried, such as a multifunctional mobile phone terminal (smartphone) and a tablet personal computer.

In the imaging device 1a, an infrared cut filter 15 that cuts light in an infrared region is arranged between the lens 10 and the imaging element 20. A wavelength component in the infrared region of the light from the subject collected by the lens 10 is cut by the infrared cut filter 15, and the light is emitted to a light receiving surface of the imaging element 20.

The imaging device 1a includes an actuator 13 configured to move the lens 10 in an optical axis direction of a light flux incident on the lens 10 and in a plane perpendicular to the optical axis direction. The lens 10 is configured integrally with a lens holder 11 that holds the lens 10 therein, and is provided with an autofocus coil 12 (hereinafter, AF coil 12) wound around a side surface of the lens holder 11 in a direction perpendicular to the optical axis direction of the light flux incident on the lens 10. The lens holder 11 is stored in an OIS holder 130 to be movable in the optical axis direction.

Hereinafter, the optical axis direction of the light flux incident on the lens 10 is referred to as a Z-axis direction, and the plane perpendicular to the optical axis direction is referred to as an XY plane. The XY plane is also a plane horizontal to the light receiving surface of the imaging element 20. In addition, axes orthogonal to the XY plane are referred to as an X axis and a Y axis. Further, it is assumed that a direction in which light is incident on the lens 10 is an upper side and a direction in which light is emitted from the lens 10 is a lower side.

The actuator 13 is configured to move the lens 10 in the Z-axis direction. For example, the actuator 13 includes the AF coil 12 provided in the lens 10, a magnet 14 provided in the OIS holder 130, and an OIS coil (not illustrated) that acts on the magnet 14 to move the OIS holder 130. For example, a permanent magnet is used as the magnet 14.

The actuator 13 has a voice coil motor (VCM) structure, and the AF coil 12 is supported by the OIS holder 130 by a spring (not illustrated). When a current flows through the AF coil 12, a force is generated in the Z-axis direction by the action of a magnetic force of the magnet 14. With this generated force, the lens 10 held by the lens holder 11 is moved in the positive direction or the negative direction of the Z axis, and a distance between the lens 10 and the imaging element 20 changes. That is, the AF coil 12 functions as a drive coil that drives the lens 10 in the Z-axis direction. Autofocus (AF) is realized with such a mechanism.

In addition, the imaging device 1a includes a control circuit 24 configured to externally control the actuator 13. The control circuit 24 is configured using, for example, an integrated circuit (IC) including a processor, and outputs a signal (hereinafter, PWM signal) modulated by pulse width modulation (PWM) to the actuator 13. The PWM signal is a signal switching between a high state and a low state at a predetermined cycle. In the actuator 13, the AF coil 12 is driven by the PWM signal to move the lens 10 in the optical axis direction.

On a circuit board 21, the imaging element 20 is fixedly arranged by being bonded by an adhesive 22, and a spacer 30 is arranged. In the example of FIG. 1, the imaging element 20 is electrically connected to a circuit pattern formed on the circuit board 21 by a metal wire 23. The above-described control circuit 24, a storage unit 25, and a connector 26 are further arranged on the circuit board 21.

The above-described OIS holder 130 is arranged on the spacer 30. At this time, the OIS holder 130 is arranged on the spacer 30 so as to be movable on an upper surface of the spacer 30 in the XY plane.

A position detection coil 32 and the OIS coil (not illustrated) are arranged on a surface of the spacer 30 facing the OIS holder 130. The position detection coil 32 generates a current by, for example, an induced electromotive force according to a change in a magnetic field generated by the AF coil 12 when a current flows through the AF coil 12 by the PWM signal. A position of the AF coil 12, that is, the lens 10 in the optical axis direction (Z-axis direction) can be detected based on the current generated by the induced electromotive force of the position detection coil 32. The position detection coil 32 and the OIS coil may be embedded inside the spacer 30.

Note that the OIS coil is driven by the control circuit 24 to adjust the position of the lens 10 on the XY plane. That is, the control circuit 24 can generate a force on the XY plane between the magnet 14 and the OIS coil by the action of the magnetic force of the magnet 14 by applying the current to the OIS coil. As a result, the lens 10 is moved in a plane parallel to the light receiving surface of the imaging element 20, and an optical camera shake correction function is realized. A mechanism for realizing the optical camera shake correction function is referred to as an optical image stabilizer (OIS).

The storage unit 25 is, for example, a read only memory (ROM) or a non-volatile memory (for example, an electrically erasable programmable read-only memory (EEPROM) or a one-time programmable ROM (OTP ROM)), and stores data for correction of a variation in the imaging device 1a in advance. For example, the amount of power of the induced electromotive force in the position detection coil 32 for lens position adjustment varies depending on the number of turns and a size of the AF coil 12 of the actuator 13, a formation condition of the position detection coil 32, and the like. Therefore, a variation in the induced electromotive force by the position detection coil 32 is measured in advance at the time of manufacturing the imaging device 1a or the like. Then, an adjustment value for adjusting the measured variation can be stored in advance in the storage unit 25. In this manner, it is possible to correct the variations in the individual imaging devices 1a using the adjustment value stored in the storage unit 25 at the time of actual control.

The connector 26 is provided to output the pixel signal supplied from the imaging element 20 via the circuit board 21 to the outside. In addition, the connector 26 also functions as a terminal configured for communication of the control circuit 24 and the storage unit 25 with the outside.

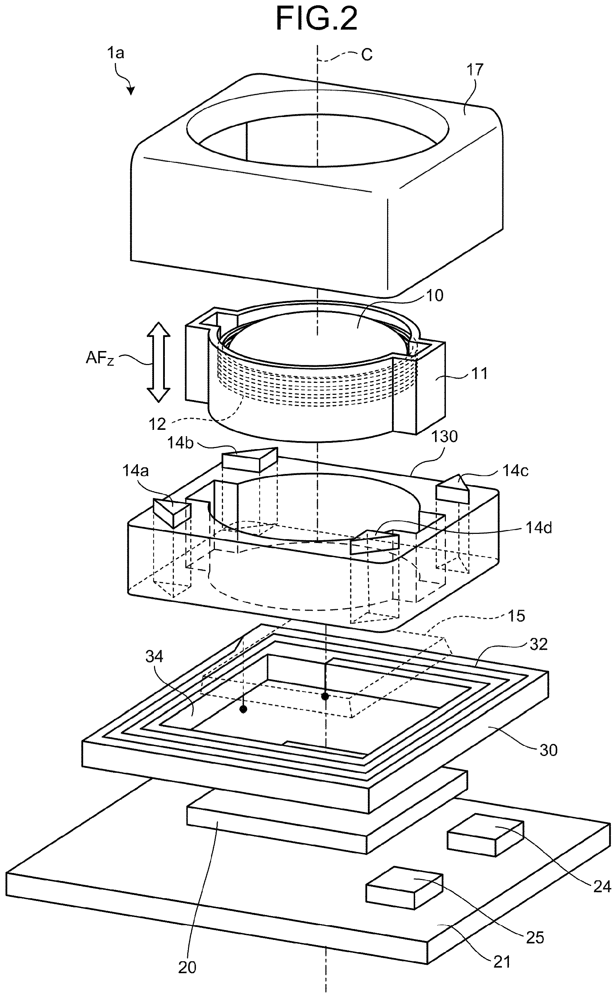

FIG. 2 is a structural diagram of an example for describing a structure of the imaging device 1a according to the first embodiment. In FIG. 2, the imaging device 1a is configured such that the spacer 30, the OIS holder 130, and the lens 10 (lens holder 11) are combined with a center line C penetrating the center of the lens 10 in the Z-axis direction, and, for example, is entirely covered with a cover 17.

In this example, magnets 14a, 14b, 14c, and 14d are embedded in four corners of the OIS holder 130. The lens 10 (lens holder 11) is configured to be movable up and down in the OIS holder 130 in the Z-axis direction as indicated by an arrow $AF_Z$.

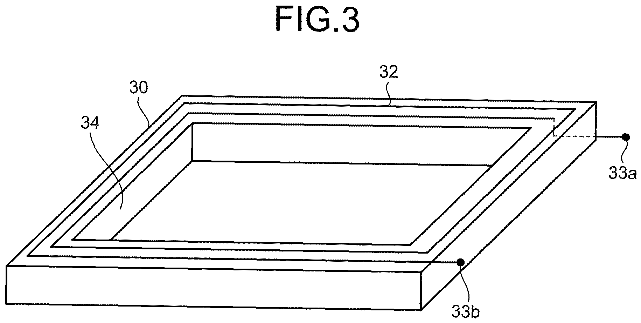

FIG. 3 is a perspective view schematically illustrating examples of the spacer 30 and the position detection coil 32 applicable to the first embodiment. The spacer 30 has a rectangular frame shape whose central portion is formed as an opening 34 corresponding to a size of the imaging element 20. The position detection coil 32 is arranged in a state of being wound around the upper surface of the spacer 30 having the rectangular frame shape. That is, the position detection coil 32 is wound around a region outside a region (opening 34) corresponding to the AF coil 12 in the plane (XY plane) orthogonal to the Z-axis direction in which the lens 10 is driven by the AF coil 12 with reference to FIG. 2.

The position detection coil 32 is connected to a circuit (which will be described later) configured to detect a position of the lens 10 by a starting end 33a and a terminating end 33b. Since the position detection coil 32 has a loop shape, one of the starting end 33a and the terminating end 33b is located inside the loop and the other is located outside the loop such that lines do not overlap. Therefore, the position detection coil 32 needs to be formed across a plurality of layers if considering that the starting end 33a and the terminating end 33b are connected to a detection circuit 31, in other words, connection lines are taken out from the starting end 33a and the terminating end 33b, respectively.

The spacer 30 includes, for example, a plurality of layers (layers) wired by copper wires, and has a role of outputting an electrical signal of the actuator 13 to the outside, such as the circuit board 21, a role of fixing the actuator 13 and the circuit board 21, and the like. In the spacer 30, a copper wire is further wired in a coil shape for detection of a magnetic field to form the position detection coil 32.

Note that the position detection coil 32 is illustrated as being wound by two turns in the example of FIG. 3, but this is an example given for the description. In practice, the position detection coil 32 is formed by the number of turns of one or more turns which allows the induced electromotive force to be effectively obtained by the AF coil 12 and the PWM signal for driving the AF coil 12.

1-2. Regarding Detection of Induced Electromotive Force

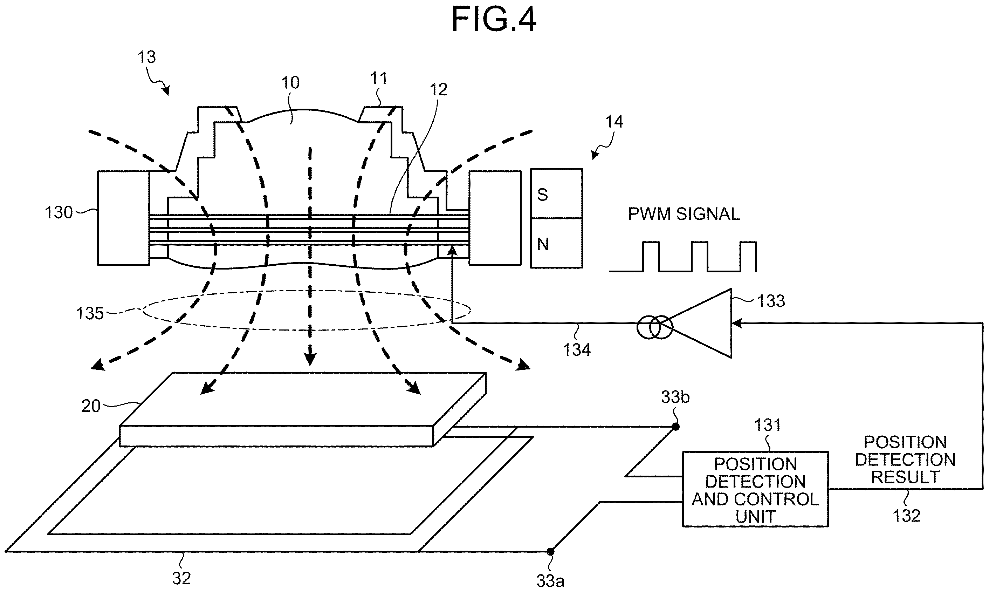

Next, detection of an induced electromotive force in the position detection coil 32, which is applicable to the first embodiment will be described. FIG. 4 is a diagram for describing a magnetic field generated by the AF coil 12 in response to a PWM waveform drive signal and an induced electromotive force generated by the magnetic field. When a current flows through the AF coil 12, a force is generated in the Z-axis direction (up-down direction in FIG. 4). With this generated force, the lens 10 held by the lens holder 11 is moved upward or downward, and the distance to the imaging element 20 changes. The autofocus is realized with such a mechanism.

Here, as compared with a case where the current flowing through the AF coil 12 is caused with a signal having a constant voltage value, that is, a signal that constantly maintains the high state, power consumption can be reduced by causing the current with the PWM signal, that is, the signal switching between the high state and the low state at a predetermined cycle. When the signal supplied to the AF coil 12 is the PWM signal, a magnetic flux 135 is generated in a direction indicated by a dotted arrow in FIG. 4. In the example of FIG. 4, the magnetic flux 135 is generated in a direction from the lens 10 side toward the imaging element 20.

Note that the magnetic flux 135 is generated in a direction different from the direction illustrated in FIG. 4 depending on a direction of the current, but a description will be continued here by taking a case where the magnetic flux 135 is generated in the direction indicated by the dotted arrow in FIG. 4 as an example.

In addition, the magnetic flux 135 generated by the AF coil 12 passes through the imaging element 20. Therefore, there is a case where an image captured by the imaging element 20 is affected by the magnetic flux 135. For example, noise is generated with the influence of the magnetic flux 135 in the imaging element 20, and there is a possibility that an image (image signal) mixed with the noise is output from the imaging element 20. Therefore, the PWM signal and a drive signal of the imaging element 20 are synchronized with each other, and the magnetic flux 135 is prevented from being generated during a drive period that becomes noise with respect to the imaging element 20. As a result, the influence of the noise from the magnetic flux 135 on the imaging element 20 can be mitigated, and an image in which the influence of the magnetic flux 135 is suppressed can be output from the imaging device 1a.

The magnetic flux 135 generated by supplying the PWM signal to the AF coil 12 also reaches the spacer 30. The position of the lens 10 in the Z-axis direction can be detected by detecting the intensity of the magnetic flux 135 reaching the spacer 30.

The spacer 30 is provided with the position detection coil 32 as described above. Since the position detection coil 32 is provided in a direction perpendicular to a direction of the magnetic flux 135 generated by the AF coil 12 according to the PWM signal, an induced electromotive force is generated in the position detection coil 32, and the position of the lens 10 (lens holder 11) in the Z-axis direction can be detected by the magnitude of the induced electromotive force. An interval between the lens 10 and the imaging element 20 can be detected by detecting the position of the lens 10 (lens holder 11) in the Z-axis direction. As a result, it is possible to drive the lens 10 with high accuracy and realize high-performance autofocus.

That is, a position detection and control unit 131 detects the induced electromotive force generated by the position detection coil 32 based on signals taken out from the starting end 33a and the terminating end 33b of the position detection coil 32 with reference to FIG. 4. The induced electromotive force generated here can be obtained by Federer's law. When a magnetic flux passing through an N-turn coil changes by a magnetic flux $\Delta\Phi$ [Wb] for a time $\Delta t$ [s], an induced electromotive force V [V] generated in the coil is expressed by the following Formula (1).

$$V = -N \cdot \Delta\Phi/\Delta t \qquad (1)$$

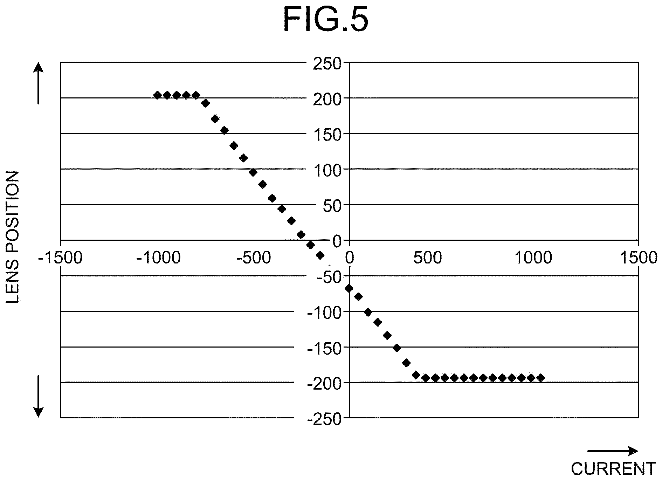

FIG. 5 is a graph illustrating an example of a relationship between a position of the lens 10 and an induced electromotive force generated by the position detection coil 32 according to the position of the lens 10, which is applicable to the first embodiment. In FIG. 5, the vertical axis represents a distance of the lens 10 (AF coil 12) to the position detection coil 32 as a relative value with respect to a predetermined position. That is, the distance in FIG. 5 is a negative value in a case where the AF coil 12 is located closer to the position detection coil 32 than the predetermined position, and is a positive value in a case where the AF coil 12 is located farther than the predetermined position. The horizontal axis represents an example of a current value generated by the induced electromotive force in the position detection coil 32. The current value is "+ (plus)" when the current flows in a predetermined direction, and is "- (minus)" when the current flows in a direction opposite to the predetermined direction.

It can be understood from FIG. 5 that the induced electromotive force generated in the position detection coil 32 changes linearly. Note that, in FIG. 5, a region where the position of the AF coil 12 does not change with respect to the current value indicates that the AF coil 12 is at a position where further movement is not possible. It can be understood that the induced electromotive force generated in the position detection coil 32 and the distance between the AF coil 12 and the position detection coil 32 are in a one-to-one relationship, except for such a region.

Here, the AF coil 12 moves together with the lens holder 11, and the lens holder 11 holds the lens 10. Therefore, the above-described expression that "the induced electromotive force generated in the position detection coil 32 and the distance between the AF coil 12 and the position detection coil 32 are in a one-to-one relationship" can be read as that the induced electromotive force and the position of the lens 10 have a one-to-one relationship. As a result, the position of the lens 10 can be detected by detecting the current generated by the induced electromotive force in the position detection coil 32.

When such a relationship is utilized, the position detection and control unit 131 can detect, for example, a position B of the position of the lens 10 after performing control for moving the lens 10 to a desired position A based on the current output from the position detection coil 32. In addition, when there is a deviation between the desired position A and the detected position B, the amount of the deviation can be detected by the current output from the position detection coil 32. The position of the lens 10 can be corrected based on the detected deviation amount, and the lens 10 can be moved to the desired position A. Therefore, the lens movement can be realized with higher accuracy.

More specifically, the position detection and control unit 131 obtains the position of the lens 10 (lens holder 11) based on the detected induced electromotive force, and outputs information indicating the obtained position as a position detection result 132. A driver 133 generates a PWM signal 134 in response to the position detection result 132 supplied from the position detection and control unit 131, and supplies the generated PWM signal 134 to the AF coil 12. When a current caused by the PWM signal 134 flows through the AF coil 12, a force is generated in the Z-axis direction by the action of the magnet 14. As a result, the lens 10 (lens holder 11) moves in the positive direction or the negative direction of the Z axis, the distance between the lens 10 and the imaging element 20 changes, so that an autofocus function is realized.

Meanwhile, it can be understood from Formula (1) that the induced electromotive force also increases as the number of turns N increases. As described above, it is possible to increase the number of turns N and to increase the induced electromotive force by forming the position detection coil 32 over the plurality of layers of the spacer 30. Therefore, the generated induced electromotive force can be easily detected by increasing the number of turns N of the position detection coil 32.

1-3. Position Detection according to First Embodiment

Next, position detection of the lens 10 based on an induced electromotive force generated in the position detection coil 32 according to the first embodiment will be described.

1-4. Principle of Position Detection according to First Embodiment

First, a principle of the position detection according to the first embodiment will be described. With only the control based on the output of the position detection coil 32 described above, the accuracy of the position detection of the lens 10 is affected by a temperature change due to disturbance and a temperature change due to an internal electrical signal due to the temperature change caused by the disturbance and the temperature change due to the internal electrical signal.

The AF coil 12 and the position detection coil 32 are formed of, for example, a copper wire. Here, a resistivity $\rho$ corresponding to a temperature t of copper is expressed by the following Formula (2). In Formula (2), a resistivity $\rho_0$ is the resistivity of copper at 0°C, and $\rho_0 = 1.55 \times 10^{-8}$ [$\Omega \cdot$m]. In addition, a value $\alpha$ is a temperature coefficient of the resistivity p, and $\alpha = 4.4 \times 10^{-3}$ [/°C].

$$\rho = \rho_0(1 + \alpha t) \tag{2}$$

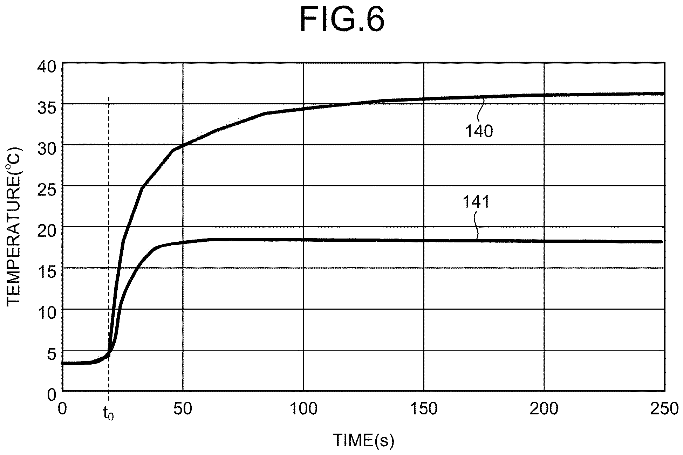

FIG. 6 is a graph illustrating examples of temporal changes in temperatures of the AF coil 12 and the position detection coil 32. In FIG. 6, the vertical axis represents the temperature [°C], and the horizontal axis represents time [sec]. In addition, a characteristic line 140 indicates an example of a temperature change of the position detection coil 32, and a characteristic line 141 indicates an example of a temperature change of the AF coil 12. At time $t_0$, for example, in the imaging device 1a, the power is turned on so that the supply of power to the imaging element 20 is started.

With reference to FIG. 6, each temperature of the AF coil 12 and the position detection coil 32 starts to rise after the power is turned on at the time $t_0$, and is stabilized after a lapse of a certain time. In the example of FIG. 6, a change in the temperature rise with time is larger in the position detection coil 32 than in the AF coil 12, and the stabilized temperature is higher in the position detection coil 32 than in the AF coil as indicated by the characteristic lines 140 and 141.

Such a difference in the change occurs because the position detection coil 32 is closer to the imaging element 20 and the like than the AF coil 12, and thus, is more susceptible to the influence of a temperature change of the imaging element 20 than the AF coil 12. In addition, the AF coil 12 is driven by the PWM signal so that the power is suppressed, and thus, the temperature rise is small, and the change in the rise is also different from that of the position detection coil 32.

With the temperature change of the position detection coil 32 and the temperature change of the AF coil 12, a resistance value of the position detection coil 32 and a resistance value of the AF coil 12 change according to the above-described Formula (2). Therefore, there occurs a situation where a signal to be taken out differs due to a change in temperature even if the positional relationship with the AF coil 12 is the same and the generated induced electromotive force is the same in the position detection coil 32.

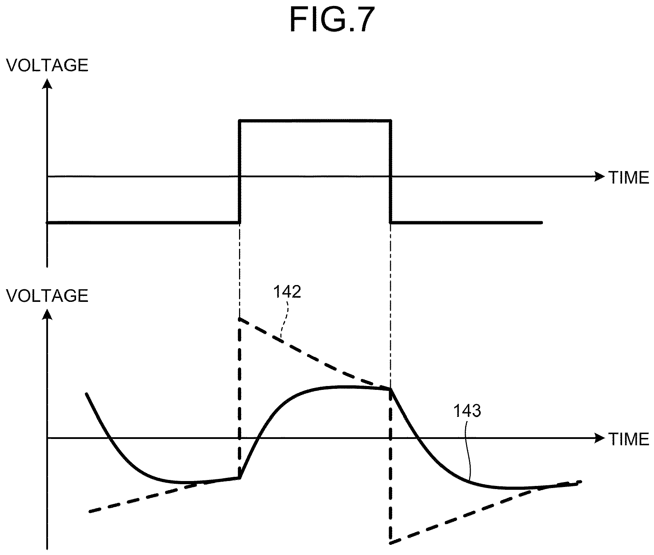

FIG. 7 is a graph schematically illustrating a change of a waveform due to an induced electromotive force detected by the position detection coil 32 depending on the temperature of the position detection coil 32 when a rectangular wave by the PWM signal is input to the AF coil 12. An upper graph of FIG. 7 schematically illustrates the waveform of the PWM signal supplied to the AF coil 12. A lower graph of FIG. 7 schematically illustrates an example of a signal waveform taken out from the position detection coil 32 corresponding to the PWM signal in the AF coil 12. In addition, the horizontal axis represents time, and the vertical axis represents a voltage in each of the upper graph and the lower graph of FIG. 7.

In the lower graph of FIG. 7, a characteristic line 142 indicates an example in a case where the temperature of the position detection coil 32 is 25°C, and a characteristic line 143 indicates an example in a case where the temperature of the position detection coil 32 is 65°C. In the example of FIG. 7, a default temperature (for example, room temperature) is 25°C, and the temperature rises from 25°C when the power is turned on. As the temperature rises, the resistance value of the position detection coil 32 also rises according to the above Formula (2).

In the lower graph of FIG. 7, it can be seen that the waveform in the case where the temperature of the position detection coil 32 is 25°C indicated by the characteristic line 142 is close to the waveform of the PWM signal, and the blunting of the waveform is little. On the other hand, when the temperature of the position detection coil 32 rises, the resistance value of the position detection coil 32 increases, and the waveform becomes blunt and the amplitude becomes small as compared with the case of 25°C as indicated by the characteristic line 143. In this manner, the amplitude of an output signal of the position detection coil 32 not only changes depending on the position of the lens 10 (AF coil 12) but also changes depending on the temperature. Therefore, it is necessary to determine whether the change in the amplitude of the output signal of the position detection coil 32 is the change depending on the position of the lens 10 or the change depending on the temperature. In the first embodiment, this determination is made by measuring the resistance values of the AF coil 12 and the position detection coil 32.

The following Formula (3) represents an example of a transfer function of an induced electromotive force of a coil generated according to a PWM signal. In Formula (3), subscripts "1" and "2" indicate a primary coil and a secondary coil, respectively. The primary coil is the AF coil 12, and the secondary coil is the position detection coil 32.

$$V_{det} = V_{pwm} \cdot \frac{sM(d)}{R_1(T_1) + sL_1} \cdot \frac{1}{sR_2(T_2)C_2 + 1} \tag{3}$$

Each variable of Formula (3) has the following meaning.

$M$: Mutual inductance between primary coil and secondary coil
$d$: Distance between primary coil and secondary coil
$V_{det}$: Induced electromotive force
$V_{pwm}$: Voltage (amplitude) of PWM signal output to actuator
$R_1$: Resistance value of primary coil (resistance value $R_{act}$)
$T_1$: Temperature component of primary coil
$R_2$: Resistance value of secondary coil (resistance value $R_{pos}$)
$T_2$: Temperature component of secondary coil
$L_1$: Inductance of primary coil
$C_2$: Capacitor of secondary coil
$s$: Laplace operator

$M(d)$ in Formula (3) is a mutual inductance having the distance between the AF coil 12 and the position detection coil 32, that is, the position d of the lens 10 in the Z-axis direction as a variable, and the position of lens 10 in the Z-axis direction can be calculated from a value of $M(d)$.

That is, among the variables of Formula (3), the voltage $V_{det}$ is acquired by an AF control unit 244 based on the output of the position detection coil 32. The voltage $V_{pwm}$ is a value of a voltage generated by the AF control unit 244. The inductance $L_1$ and the capacitor $C_2$ are fixed characteristics in the AF coil 12 and the position detection coil 32, respectively. Therefore, if the resistance values $R_1$ and $R_2$, that is, the resistance values $R_{act}$ and $R_{pos}$ are known, the mutual inductance M(d) can be calculated, and the position d of the lens 10 in the Z-axis direction can be acquired.

Here, the resistance value $R_1$, that is, the resistance value $R_{act}$, and the resistance value $R_2$, that is, the resistance value $R_{pos}$ are values that depend on the temperature as being represented as resistance values $R_1(T_1)$ and $R_2(T_2)$ of Formula (3) and described with reference to FIG. 6. Therefore, the resistance value $R_1$ (resistance value $R_{act}$) and the resistance value $R_2$ (resistance value $R_{pos}$) are preferably measured, for example, at predetermined intervals.

Here, the temperature changes indicated by the characteristic lines 140 and 141 in FIG. 6 are merely examples, and the present invention is not limited thereto. That is, temperature changes of the position detection coil 32 and the AF coil 12 vary depending on the structure of the imaging device 1a, for example, the arrangement of the position detection coil 32, the power consumption in the imaging element 20, and a heat dissipation structure (not illustrated) of the imaging device 1a.

In the first embodiment, the resistance value $R_{act}$ of the AF coil 12 and the resistance value $R_{pos}$ of the position detection coil 32 are measured. Then, a current value (or a voltage value) corresponding to the induced electromotive force generated in the position detection coil 32 is corrected based on the measured resistance values $R_{act}$ and $R_{pos}$. Therefore, the position d of the lens 10 in the Z-axis direction can be obtained with higher accuracy based on the induced electromotive force generated in the position detection coil 32 in the state where the influence of the thermal structure of the imaging device 1a is suppressed.

Note that Patent Literature 1 discloses a technology for realizing low power consumption by using a PWM signal for driving of an actuator and reducing noise to a solid-state imaging element caused by the PWM signal. In addition, a position of a lens can be detected using an induced electromotive force generated from the PWM signal in Patent Literature 1. However, the technique of Patent Literature 1 does not describe a solution for performance deterioration due to blunting of a waveform of the PWM signal or the induced electromotive force caused by a temperature variation from the actuator or the solid-state imaging element during the operation of an imaging device or temperature variation due to the influence of disturbance.

1-5. Specific Configuration Example according to

First Embodiment

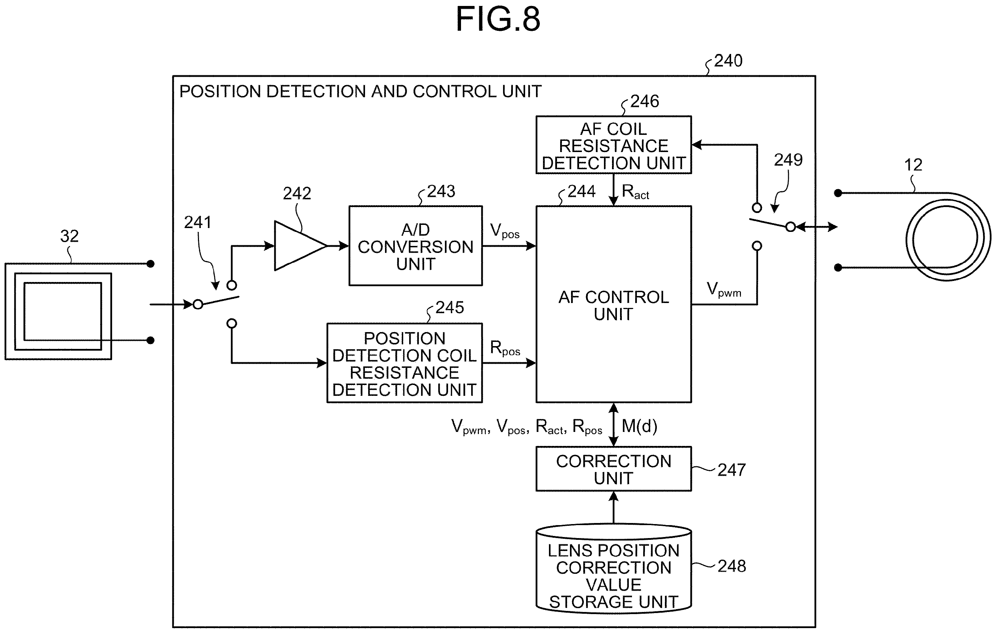

Next, position detection and control of the lens 10 according to the first embodiment will be described in more detail. FIG. 8 is a block diagram illustrating a configuration of an example of a position detection and control unit that performs the position detection and control of the lens 10 according to the first embodiment. In FIG. 8, a position detection and control unit 240 corresponds to the position detection and control unit 131 described in FIG. 4, and includes switches 241 and 249, an amplification unit 242, an A/D conversion unit 243, an autofocus (AF) control unit 244, a position detection coil resistance detection unit 245, an AF coil resistance detection unit 246, a correction unit 247, and a lens position correction value storage unit 248.

The position detection and control unit 240 is included in the control circuit 24 of FIG. 1, for example, and is mounted on the circuit board 21. In addition, the operation of each unit included in the position detection and control unit 240 is controlled by, for example, an instruction of the processor included in the control circuit 24.

In the position detection and control unit 240, the AF control unit 244 generates a PWM signal having the voltage $V_{pwm}$ for moving the lens 10 to a target position D in the Z-axis direction of the lens 10 specified from the outside. The PWM signal having the voltage $V_{pwm}$ is supplied to the AF coil 12.

The switch 241 selects whether to execute a function of detecting the position of the AF coil 12 (lens 10) with respect to the position detection coil 32 or to execute a function of detecting the resistance value $R_{pos}$ of the position detection coil 32 in the position detection and control unit 240. When the execution of the function of detecting the position of the AF coil 12 (lens 10) is selected in the switch 241, a detection signal in response to an induced electromotive force generated in accordance with the driving of the AF coil 12 in the position detection coil 32 is input to the amplification unit 242. The amplification unit 242 amplifies the supplied detection signal and supplies the amplified detection signal to the A/D conversion unit 243. The A/D conversion unit 243 converts the supplied detection signal of an analog type into a detection signal of a digital type. This detection signal is supplied to the AF control unit 244 as a voltage $V_{pos}$ corresponding to the position of the AF coil 12 (lens 10).

On the other hand, when the execution of the function of detecting the resistance value $R_{pos}$ indicating the resistance of the position detection coil 32 is selected in the switch 241, the detection signal taken out from the position detection coil 32 is input to the position detection coil resistance detection unit 245 (second detection unit). The position detection coil resistance detection unit 245 detects the resistance value $R_{pos}$ of the position detection coil 32 based on the input detection signal. A specific configuration example for detecting the resistance value $R_{pos}$ of the position detection coil 32 will be described later. The resistance value $R_{pos}$ detected by the position detection coil resistance detection unit 245 is supplied to the AF control unit 244.

In the position detection and control unit 240, the switch 249 selects whether to execute a function of driving the AF coil 12 by the AF control unit 244 or to execute a function of detecting the resistance value $R_{act}$ of the AF coil 12. When the execution of the function of driving the AF coil 12 is selected in the switch 249, the PWM signal having the voltage $V_{pwm}$ generated in the AF control unit 244 is supplied to the AF coil 12. The AF coil 12 is driven by the PWM signal and moved to a position corresponding to the voltage $V_{pwm}$ of the PWM signal in the Z-axis direction.

On the other hand, when the function of detecting the resistance value $R_{act}$ indicating the resistance of the AF coil 12 is selected in the switch 249, the AF coil resistance detection unit 246 (first detection unit) detects the resistance value $R_{act}$ of the AF coil 12 based on the PWM signal of the voltage $V_{pwm}$ supplied to the AF coil 12 by the AF control unit 244. A specific configuration example for detecting the resistance value $R_{act}$ of the AF coil 12 will be described later. A value indicating the resistance value $R_{act}$ detected by the AF coil resistance detection unit 246 is supplied to the AF control unit 244.

The AF control unit 244 delivers the voltage $V_{pwm}$ of the generated PWM signal, the voltage $V_{pos}$ supplied from the A/D conversion unit 243, the resistance value $R_{pos}$ supplied from the position detection coil resistance detection unit 245, and the resistance value $R_{act}$ supplied from the AF coil resistance detection unit 246 to the correction unit 247.

The correction unit 247 (correction value generation unit) obtains a current position d of the AF coil 12 (lens 10) in the Z-axis direction based on the voltage $V_{pwm}$, the voltage $V_{pos}$, the resistance value $R_{pos}$, and the resistance value $R_{act}$ delivered from the AF control unit 244. Then, the correction unit 247 corrects the current position control of the AF coil 12 based on the obtained position d.

Here, considered is a case where a temperature change of the resistance value $R_{pos}$ of the position detection coil 32 is extremely small as compared with a temperature change of the resistance value $R_{act}$ of the AF coil 12 so that the temperature dependence of the resistance value $R_{pos}$ can be ignored. This corresponds to, for example, a case where the resistance value $R_2(T_2) = R_{pos} = 0$ in the above-described Formula (3).

For example, a correction value table in which the voltage $V_{pwm}$, the voltage $V_{pos}$, the resistance value $R_{act}$, and a position $d_R$ (mutual inductance M(d)) obtained when the voltage $V_{pwm}$, the voltage $V_{pos}$, and the resistance value $R_{act}$ are applied to Formula (3) are associated with each temperature of the AF coil 12 is stored in the lens position correction value storage unit 248 in advance. Note that the voltage $V_{pos}$ corresponds to the voltage $V_{det}$ in Formula (3). At this time, it is possible to suppress a size of the correction value table, for example, by applying linear interpolation between the temperatures.

As an example, the correction unit 247 acquires the voltage $V_{pwm}$ of the PWM signal from the AF control unit 244, and obtains the position $d_v$ at which the AF coil 12 is currently driven. The correction unit 247 refers to the correction value table stored in the lens position correction value storage unit 248 based on the voltage $V_{pwm}$, the voltage $V_{pos}$, and the resistance value $R_{act}$ delivered from the AF control unit 244 to acquire the position $d_R$.

The correction unit 247 calculates a difference $\Delta d$ between the acquired position $d_R$ and the above-described position $d_v$, and corrects the target position D and the position $d_v$ at which the AF coil 12 is currently driven based on the calculated difference $\Delta d$. For example, the correction unit 247 corrects the target position D into a target position D' (= D + $\Delta d$) to which the difference $\Delta d$ has been added. The position $d_v$ is not corrected. The correction unit 247 delivers the corrected target position D' to the AF control unit 244.

The AF control unit 244 generates the voltage $V_{pwm}$ of the PWM signal for driving the AF coil 12 so as to move the lens 10 (AF coil 12) delivered from the correction unit 247 to the target position D', and supplies the voltage $V_{pwm}$ to the AF coil 12. The AF coil 12 is driven by the voltage $V_{pwm}$ and moved to the target position D'.

Note that the correction unit 247 corrects the current position control of the AF coil 12 using the resistance value $R_{act}$ of the AF coil 12 in the above description, but in the invention the correction unit 247 also performs the correction by further using the resistance value $R_{pos}$ of the position detection coil 32.

For example, a correction value table in which the voltage $V_{pwm}$, the voltage $V_{pos}$, the resistance value $R_{act}$, the resistance value $R_{pos}$, and the position $d_R$ (mutual inductance M(d)) obtained when the voltage $V_{pwm}$, the voltage $V_{pos}$, the resistance value $R_{act}$, and the resistance value $R_{pos}$ are applied to Formula (3) are associated with each temperature of the AF coil 12 and the position detection coil 32 is stored in the lens position correction value storage unit 248 in advance. At this time, it is possible to suppress a size of the correction value table, for example, by applying linear interpolation between the temperatures.

In the same manner as described above, the correction unit 247 acquires the voltage $V_{pwm}$ of the PWM signal from the AF control unit 244, and obtains the position $d_v$ at which the AF coil 12 is currently driven on the assumption that the resistance value $R_{act}$ in the AF coil 12 has no temperature dependence. The correction unit 247 refers to the correction value table stored in the lens position correction value storage unit 248 based on the voltage $V_{pwm}$, the voltage $V_{pos}$, the resistance value $R_{act}$, and the resistance value $R_{pos}$ delivered from the AF control unit 244 to acquire the position $d_R$.

The correction unit 247 calculates a difference $\Delta d$ between the acquired position $d_R$ and the above-described position $d_v$, and corrects the target position D and the position $d_v$ at which the AF coil 12 is currently driven based on the calculated difference $\Delta d$. For example, the correction unit 247 corrects the target position D into a target position D' (= D + $\Delta d$) to which the difference $\Delta d$ has been added. In addition, the correction unit 247 corrects the position $d_v$ to a position $d_v$' (= $d_v$ - $\Delta d$) obtained by subtracting the difference $\Delta d$. The correction unit 247 delivers the corrected target position D' and

position $d_v$' to the AF control unit 244.

1-6. More Specific Configuration Example of Resistance Detection of Each Coil

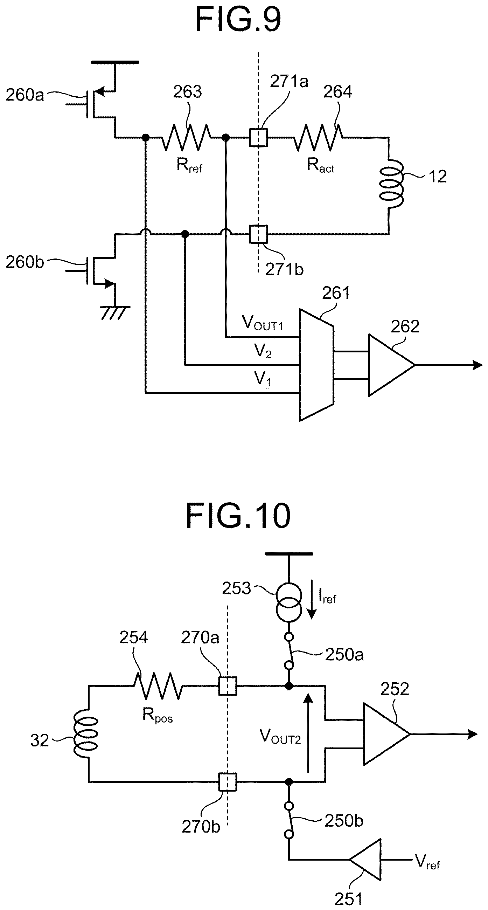

FIG. 9 is a circuit diagram illustrating a configuration of an example for detecting the resistance value $R_{act}$ of the AF coil 12, which is applicable to the first embodiment. Note that a resistance 264 schematically illustrates the resistance value $R_{act}$ of the AF coil 12 in FIG. 9, and is not a resistance value of an independent resistance element with respect to the AF coil 12.

Note that terminals 271a and 271b are connection portions that connect the control circuit 24 arranged on the circuit board 21 and the AF coil 12 arranged outside the circuit board 21. In FIG. 9, the left side of each of the terminals 271a and 271b is included in the control circuit 24.

In FIG. 9, one end of the AF coil 12 is connected to one end of a resistance 263 having a known resistance value $R_{ref}$, and the other end of the resistance 263 is connected to a drain of a transistor 260a. The other end of the AF coil 12 is connected to a drain of a transistor 260b. In the example of FIG. 9, the transistor 260a is, for example, a P-channel metal oxide semiconductor field effect transistor (MOSFET), and the transistor 260b is, for example, an N-channel MOSFET. A source of the transistor 260a is connected to a power supply voltage $V_{DD}$, and a source of the transistor 260b is connected to a ground potential. The PWM signal of the voltage $V_{pwm}$ based on the voltage $V_{DD}$ is generated, for example, by exclusively setting gates of the transistors 260a and 260b to the high state or the low state. This PWM signal is supplied to the AF coil 12.

A voltage $V_{OUT1}$ is taken out from the end of the resistance 263 on the side connected to the AF coil 12, and a voltage $V_1$ is taken out from the end of the transistor 260a on the side connected to the drain. In addition, a voltage $V_2$ is taken out from a connection point where the AF coil 12 and the drain of the transistor 260b are connected. The voltages $V_{OUT1}$, $V_1$, and $V_2$ are supplied to a signal selection unit 261. The output of the signal selection unit 261 is supplied to a subtraction unit 262.

The signal selection unit 261 and the subtraction unit 262 obtain the resistance value $R_{act}$ of the AF coil 12 by the following Formula (4) using the voltages $V_{OUT1}$, $V_1$, and $V_2$ and the resistance value $R_{ref}$ of the resistance 263 which is a known value.

$$R_{act} = R_{ref} \times \frac{V_{OUT1} - V_2}{V_1 - V_{OUT1}} \qquad (4)$$

For example, calculated are a value obtained by selecting the voltage $V_{OUT}$, and the voltage $V_2$ by the signal selection unit 261 and subtracting the voltage $V_2$ from the voltage $V_{OUT}$, by the subtraction unit 262, and a value obtained by selecting the voltage $V_1$ and the voltage $V_{OUT}$, by the signal selection unit 261 and subtracting the voltage $V_{OUT1}$ from the voltage $V_1$ by the subtraction unit 262. The resistance value $R_{act}$ of the AF coil 12 is obtained by multiplying a result obtained by dividing the value obtained by subtracting the voltage $V_2$ from the voltage $V_{OUT1}$ by the value obtained by subtracting the voltage $V_{OUT1}$ from the voltage $V_1$ by the resistance value $R_{ref}$. For example, the subtraction unit 262 can hold each subtraction result and perform division on the held subtraction result. The resistance value $R_{act}$ of the AF coil 12 obtained by the AF coil resistance detection unit 246 is delivered to the AF control unit 244.

FIG. 10 is a circuit diagram illustrating a configuration of an example for detecting the resistance value $R_{pos}$ of the position detection coil 32, which is applicable to the first embodiment. Note that a resistance 254 schematically illustrates the resistance value $R_{pos}$ of the position detection coil 32 in FIG. 10, and is not a resistance value of an independent resistance element.

In FIG. 10, both ends of the position detection coil 32 are connected to a detector 252. The detector 252 detects a voltage between the two connected ends, and is inserted, for example, between the position detection coil 32 and the switch 241 in FIG. 8. In the detector 252, the starting end 33a and the terminating end 33b of the position detection coil 32 are connected as inputs, and an output is connected to the position detection coil resistance detection unit 245 via the switch 241.

Note that terminals 270a and 270b are connection portions that connect the control circuit 24 arranged on the circuit board 21 and the position detection coil 32 arranged outside the circuit board 21. In FIG. 10, the right side of each of the terminals 270a and 270b is included in the control circuit 24.

In FIG. 10, a current source 253, switches 250a and 250b, and a buffer amplifier 251 are included in the position detection coil resistance detection unit 245. A side of the amplification unit 242 is selected by the switch 241 to turn each of the switches 250a and 250b into an off (open) state. In this case, a voltage $V_{OUT2}$ detected by the detector 252 is a voltage corresponding to the position of the AF coil 12 (lens 10) in the Z-axis direction. The voltage $V_{OUT2}$ detected by the detector 252 is supplied to the amplification unit 242 via the switch 241.

A side of the position detection coil resistance detection unit 245 is selected by the switch 241 to turn each of the switches 250a and 250b into an on (closed) state. As each of the switches 250a and 250b is turned on, a reference voltage $V_{ref}$ is applied to one end of the position detection coil 32 via the buffer amplifier 251, whereby a reference current $I_{ref}$ is supplied from the current source 253 to the other end of the position detection coil 32 via the switch 250a. The detector 252 detects the voltage $V_{OUT2}$ across the both ends of the position detection coil 32. The voltage $V_{OUT2}$ detected by the detector 252 is supplied to the position detection coil resistance detection unit 245 via the switch 241.

The position detection coil resistance detection unit 245 obtains the resistance value $R_{pos}$ of the position detection coil 32 by the following Formula (5) based on the voltage $V_{OUT2}$ supplied from the detector 252 and the reference current $I_{ref}$ which is a known value. The position detection coil resistance detection unit 245 delivers the obtained resistance value $R_{pos}$ to the AF control unit 244. Although a coil resistance detection circuit is illustrated in FIG. 10, some recent solid-state imaging elements include a built-in thermometer, and this thermometer can be used as a substitute for the coil resistance detection circuit.

$$R_{pos} = \frac{V_{OUT2}}{I_{ref}} \hspace{4cm} (5)$$

1-7. More Specific Example of Lens Drive Control according to First Embodiment

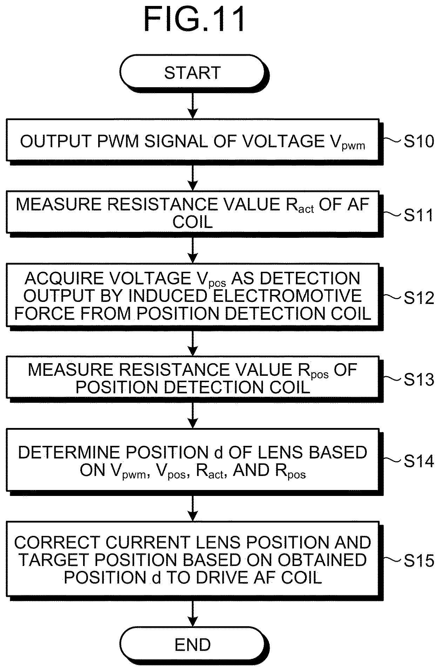

FIG. 11 is a flowchart illustrating an example of drive control processing of the AF coil 12 by the position detection and control unit 240 according to the first embodiment. Note that, here, the position detection and control unit 240 uses the resistance value $R_{act}$ of the AF coil 12 and the resistance value $R_{pos}$ of the position detection coil 32 to obtain a correction value for driving the AF coil 12.

In Step S10, the position detection and control unit 240 outputs a PWM signal having a voltage $V_{pmw}$ by the AF control unit 244 according to the target position D of the lens 10, for example. The AF coil 12 is driven by the PWM signal and moved to a position corresponding to the voltage $V_{pwm}$ in the Z-axis direction.

In the next Step S11, the position detection and control unit 240 causes the AF coil resistance detection unit 246 to measure the resistance value $R_{act}$ of the AF coil 12. The measured resistance value $R_{act}$ is delivered to the AF control unit 244.

In the next Step S12, the position detection and control unit 240 supplies a detection signal corresponding to the induced electromotive force in the position detection coil 32 to the A/D conversion unit 243 via the amplification unit 242, and the A/D conversion unit 243 converts the detection signal into a digital signal. This signal is supplied to the AF control unit 244 as the voltage $V_{pos}$ indicating the position of the AF coil 12 (lens 10).

In the next Step S13, the position detection and control unit 240 causes the position detection coil resistance detection unit 245 to measure the resistance value $R_{pos}$ of the position detection coil 32. The measured resistance value $R_{pos}$ is delivered to the AF control unit 244.

In the next Step S14, the correction unit 247 in the position detection and control unit 240 receives, from the AF control unit 244, the resistance value $R_{act}$ acquired in Step S11, the voltage $V_{pos}$ acquired in Step S12, the resistance value $R_{pos}$ acquired in Step S13, and the voltage $V_{pos}$ of the PWM signal output for driving the AF coil 12 in Step S10. The correction unit 247 refers to the correction value table stored in the lens position correction value storage unit 248 based on the received resistance value $R_{act}$, voltage $V_{pos}$, resistance value $R_{pos}$, and voltage $V_{pos}$, and obtains information indicating the position d (position $d_R$) of the lens 10 (lens holder 11) in the Z-axis direction.

In the next Step S15, the correction unit 247 in the position detection and control unit 240 corrects the position d (position $d_V$) at which driving is currently performed and the target position D based on the information indicating the position d (position $d_R$) obtained in Step S14. As described above, the correction unit 247 obtains the difference $\Delta d$ between the position $d_R$ and the position $d_V$, and corrects the position $d_V$ and the target position D based on the difference $\Delta d$.

The correction unit 247 delivers the position $d_V$' obtained by correcting the position $d_V$ and the target position D' obtained by correcting the target position D to the AF control unit 244. The AF control unit 244 drives the AF coil 12 according to the corrected position $d_V$ and target position D' delivered from the correction unit 247, and moves the lens 10 (lens holder 11) to the target position D'.

Note that a series of processes according to the flowchart illustrated in FIG. 11 is repeatedly executed at predetermined intervals. For example, the series of processes is executed within one frame period (for example, 1/30 [sec]) in synchronization with an imaging timing in the imaging element 20. Then, the series of processes is repeatedly executed at a timing of every plurality of frames, for example, every 30 frames, every 15 frames, or the like.

In the first embodiment, the resistance value $R_{act}$ of the AF coil 12 is measured, and the target position D' of the lens 10 (lens holder 11) is obtained based on the measured resistance value $R_{act}$ as described above. Therefore, the position of the lens 10 (lens holder 11) in the Z-axis direction can be controlled with high accuracy even if the temperature of the AF coil 12 varies. In addition, the position of the AF coil 12 in the Z-axis direction can be controlled with higher accuracy by additionally measuring the resistance value $R_{pos}$ of the position detection coil 32.

1(1). First Modification of First Embodiment

Next, a first modification of the first embodiment will be described. In the imaging device 1a according to the first embodiment described above, the position detection coil 32 is provided on the spacer 30 as illustrated in FIG. 1. On the other hand, the first modification of the first embodiment is an example in which the position detection coil 32 is provided on the circuit board 21 or in the circuit board 21.

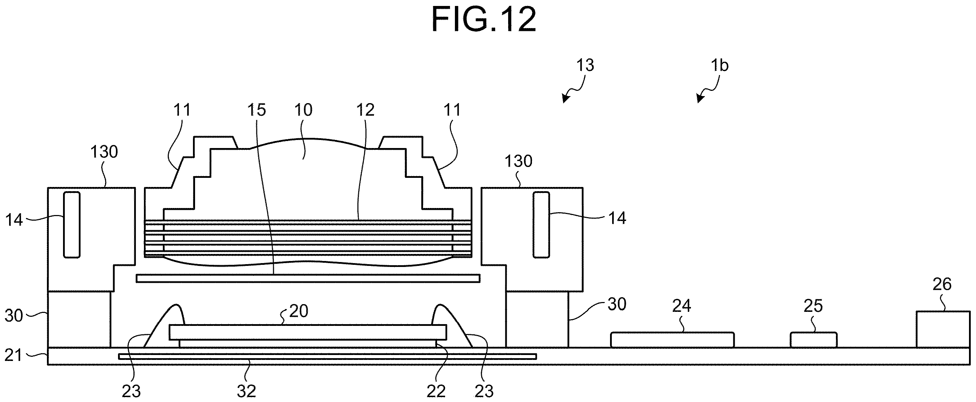

FIG. 12 is a diagram illustrating a configuration of an example of an imaging device 1b according to the first modification of the first embodiment. In the example of FIG. 12, the position detection coil 32 in the imaging device 1b is embedded in a position corresponding to the AF coil 12 in the circuit board 21. The circuit board 21 is formed so as to include a pattern made of copper, for example, referred to as a flexible pattern circuit (FPC), and has a function of electrically connecting the imaging element 20 and the outside.

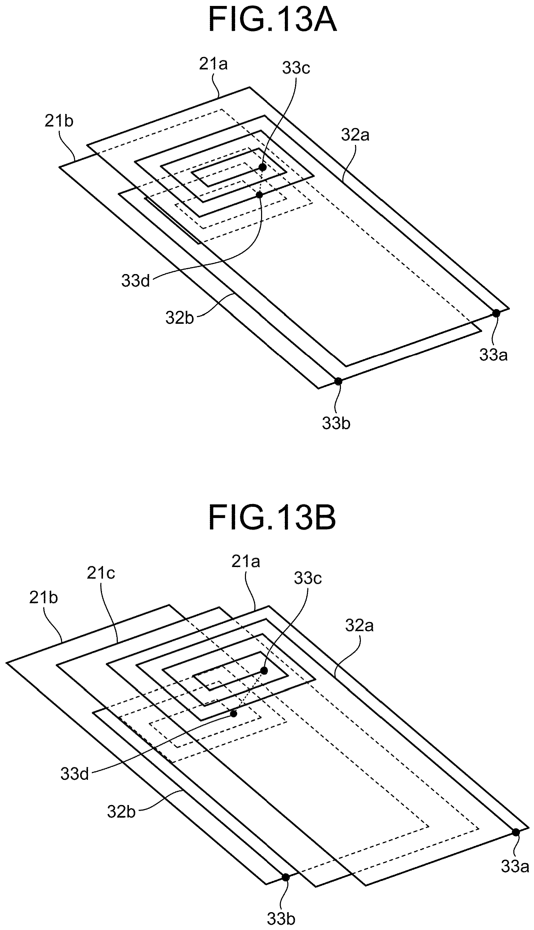

FIG. 13A is a diagram illustrating an example of a configuration of the position detection coil 32 in the circuit board 21 having a two-layer structure applicable to the first embodiment. In FIG. 13A, the circuit board 21 is formed of two layers of a first circuit board 21a and a second circuit board 21b. The position detection coil 32 is formed to be separated into a position detection coil 32a on the first circuit board 21a and a position detection coil 32b on the second circuit board 21b. The present invention is not limited thereto, and the position detection coils 32a and 32b may be formed on both surfaces of the first circuit board 21a, respectively. The separated position detection coils 32a and 32b are arranged on the first circuit board 21a and the second circuit board 21b in alignment so as to function as one position detection coil 32 as a whole.

The starting end 33a of the position detection coil 32 is formed on the first circuit board 21a, and the position detection coil 32a is formed by a loop directed inward from the outside on the first circuit board 21a by a circuit pattern connected to the starting end 33a. A terminating end 33c of the position detection coil 32a is connected to a starting end 33d of the position detection coil 32b of the second circuit board 21b via the first circuit board 21a. In the second circuit board 21b, the position detection coil 32b is formed by a loop directed outward from the starting end 33d, and the terminating end 33b is formed at the end of the loop.

FIG. 13B is a diagram illustrating an example in which the circuit board 21 has a three-layer structure, which is applicable to the first embodiment. In FIG. 13B, the circuit board 21 has the three-layer structure of the first circuit board 21a, the second circuit board 21b, and a third circuit board 21c arranged between the first circuit board 21a and the second circuit board 21b.

In the example of FIG. 13B, the starting end 33a of the position detection coil 32 is formed on the first circuit board 21a, and the position detection coil 32a is formed by a loop directed inward from the outside on the first circuit board 21a by a circuit pattern connected to the starting end 33a. The terminating end 33c of this loop is connected to the starting end 33d of the loop of the second circuit board 21b via the first circuit board 21a and the third circuit board 21c. In the second circuit board 21b, the position detection coil 32b is formed by a loop directed outward from the starting end 33d, and the terminating end 33b is formed at the end of the loop.

In the example of FIG. 13B, the position detection coil 32 is not formed on the third circuit board 21c located in the middle among the first circuit board 21a, the second circuit board 21b, and the third circuit board 21c. The third circuit board 21c can form, for example, wiring or a circuit configured to output a pixel signal from the imaging element 20 to the outside. Note that a connection line that connects the terminating end 33c of the coil formed on the first circuit board 21a and the starting end 33d of the coil formed on the second circuit board 21b is formed on the third circuit board 21c.

Although the examples in which the circuit board 21 has the two-layer structure and the three-layer structure, respectively, have been described in the above description, this is not limited to such examples. That is, the circuit board 21 may be configured to have four or more layers, and the position detection coil 32 may be formed by being divided into, for example, three or more layers among the four layers.

In the first modification of the first embodiment, the position detection coil 32 is wound and arranged in a region including an inner side of a region corresponding to the AF coil 12 in the plane (XY plane) orthogonal to the Z-axis direction in which the lens 10 is driven by the AF coil 12 with reference to FIG. 2. Since the position detection coil 32 is not arranged on the spacer 30, the configuration can be simplified in the first modification of the first embodiment. In addition, the more magnetic flux 135 can pass through the position detection coil 32 as compared with the case where the position detection coil 32 is arranged on the spacer 30 as illustrated in FIG. 4, so that the detection accuracy can be improved.

In this manner, even in the configuration in which the position detection coil 32 is provided on the circuit board 21 or in the circuit board 21, a change in the magnetic flux 135 generated in the AF coil 12 can be detected by the position detection coil 32 similarly to the first embodiment described above. In addition, the position of the lens 10 (lens holder 11) in the Z-axis direction can be controlled with high accuracy even if the temperatures of the AF coil 12 and the position detection coil 32 vary by measuring the resistance values $R_{act}$ and $R_{pos}$ of the AF coil 12 and the position detection coil 32, which is similar to the first embodiment described above.

Note that the position detection coil 32 is formed inside the circuit board 21 in the example of FIG. 12, but this is not limited to this example. As another example of the first modification of the first embodiment, the position detection coil 32 can be also formed inside the imaging element 20.

1(2). Second Modification of First Embodiment

Next, a second modification of the first embodiment will be described. In the imaging device 1a according to the first embodiment described above, the imaging element 20 is mounted by providing the imaging element 20 on the circuit board 21 and electrically connecting the imaging element 20 and the circuit board 21 by the metal wire 23 as illustrated in FIG. 1. On the other hand, the second modification of the first embodiment is an example in which the imaging element 20 is mounted on the spacer 30 by flip-chip mounting.

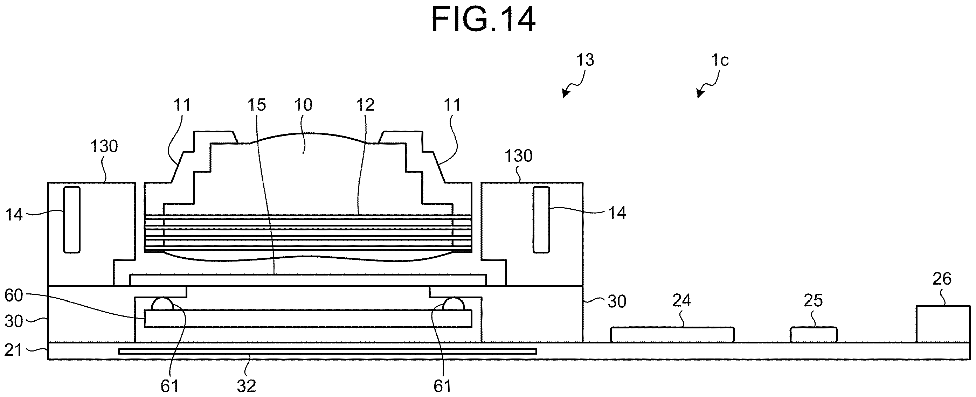

FIG. 14 is a diagram illustrating an example of an imaging device by flip-chip mounting according to the second modification of the first embodiment. In FIG. 14, an imaging element 60 corresponding to the imaging element 20 in an imaging device 1c is flip-chip mounted on an eaves-shaped portion provided inside an opening on an upper end side of the spacer 30. A wiring pattern for connection with the circuit board 21 is formed in the eaves-shaped portion of the spacer 30, and the imaging element 60 and the wiring pattern of the spacer 30 are electrically connected by a bump 61 which is a protruding terminal. The position detection coil 32 is provided at a position corresponding to a position of the AF coil 12 on the circuit board 21, which is similar to the first modification of the first embodiment described above.

In this manner, even in the configuration including the flip-chip mounted imaging element 60, a change in the magnetic flux 135 generated in the AF coil 12 can be detected by the position detection coil 32 similarly to the first embodiment described above. In addition, the position of the lens 10 (lens holder 11) in the Z-axis direction can be controlled with high accuracy even if the temperatures of the AF coil 12 and the position detection coil 32 vary by measuring the resistance values $R_{act}$ and $R_{pos}$ of the AF coil 12 and the position detection coil 32, which is similar to the first embodiment described above.

Note that the position detection coil 32 is embedded in the circuit board 21 in the example of FIG. 14, but this is not limited to this example. As still another example of the second modification of the first embodiment, the position detection coil 32 can be provided on the spacer 30, which is similar to the first embodiment described above.

1(3). Third Modification of First Embodiment

Next, a third modification of the first embodiment will be described. The third modification of the first embodiment is an example of using an imaging element having a chip-size package (CSP) structure as an extremely small package that is realized with a size similar to that of a single chip.

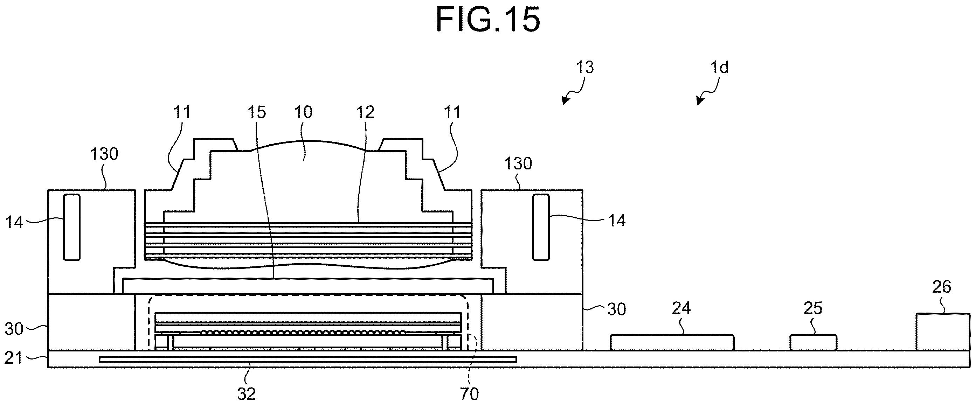

FIG. 15 is a diagram illustrating a configuration of an example of an imaging device using the imaging element having the CSP structure according to the third modification of the first embodiment. In FIG. 15, an imaging device 1d includes an imaging element 70 having the CSP structure which corresponds to the above-described imaging element 20.

The imaging element 70 has, for example, a two-layer structure including a first chip in which light receiving elements are arranged in an array and a second chip in which a circuit controlling the light receiving elements and performing signal processing on signals output from the light receiving elements is formed. In addition, in the imaging element 70, a glass substrate (not illustrated), configured to fix the elements and protect light receiving surfaces, is arranged with respect to the light receiving surfaces arranged in an array. In addition, the infrared cut filter 15 is arranged with respect to the imaging element 70 in the example of FIG. 15. The imaging element 70 is bonded and fixed to the spacer 30 and the circuit board 21 by an adhesive (not illustrated).

The position detection coil 32 is provided at a position corresponding to a position of the AF coil 12 on the circuit board 21, which is similar to the first modification of the first embodiment described above. Without being limited thereto, the position detection coil 32 can be provided on the spacer 30 as still another example of the third modification of the first embodiment, which is similar to the first embodiment described above.

In this manner, even in the configuration including the imaging element 70 having the CSP structure, a change in the magnetic flux 135 generated in the AF coil 12 can be detected by the position detection coil 32 similarly to the first embodiment described above. In addition, the position of the lens 10 (lens holder 11) in the Z-axis direction can be controlled with high accuracy even if the temperatures of the AF coil 12 and the position detection coil 32 vary by measuring the resistance values $R_{act}$ and $R_{pos}$ of the AF coil 12 and the position detection coil 32, which is similar to the first embodiment described above.

1(4). Fourth Modification of First Embodiment

Next, a fourth modification of the first embodiment will be described. The fourth modification of the first embodiment is an example in which the lowermost lens among a plurality of lenses included in the lens 10 is separated from the lens holder 11 and arranged closer to the imaging element having the CSP structure in the third modification of the first embodiment described above.

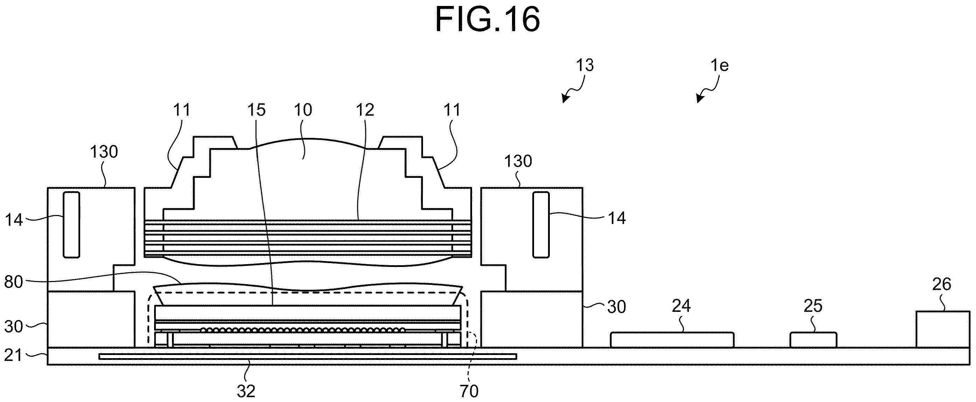

FIG. 16 is a diagram illustrating a configuration of an example of an imaging device according to the fourth modification of the first embodiment. In FIG. 16, in an imaging device 1e, a lowermost lens 80 among the plurality of lenses included in the lens 10 is arranged on the infrared cut filter 15 on the imaging element 70. Since the lowermost lens 80 among the plurality of lenses included in the lens 10 is arranged on the imaging element 70 side, the height of the imaging device 1e can be reduced. In addition, the infrared cut filter 15 is provided to the imaging element 70 via a glass substrate for protection (not illustrated) in the example of FIG. 16. As a result, it is possible to further reduce the height.

The position detection coil 32 is provided at a position corresponding to a position of the AF coil 12 on the circuit board 21, which is similar to the first modification of the first embodiment described above. Without being limited thereto, the position detection coil 32 can be provided on the spacer 30 as still another example of the third modification of the first embodiment, which is similar to the first embodiment described above.

In this manner, even in the configuration in which the lowermost lens 80 among the plurality of lenses included in the lens 10 is arranged on the infrared cut filter 15 on the imaging element 70, a change in the magnetic flux 135 generated in the AF coil 12 can be detected by the position detection coil 32 similarly to the first embodiment described above. In addition, the position of the lens 10 (lens holder 11) in the Z-axis direction can be controlled with high accuracy even if the temperatures of the AF coil 12 and the position detection coil 32 vary by measuring the resistance values $R_{act}$ and $R_{pos}$ of the AF coil 12 and the position detection coil 32, which is similar to the first embodiment described above.

2. Second Embodiment

2-1. Schematic Description of Principle of Second Embodiment

Next, a second embodiment of the present disclosure will be described. The second embodiment is an example that can handle a characteristic change depending on a temperature of the lens 10. Characteristics of the lens 10 change depending on the temperature of the lens 10. This is more remarkable in a case where the lens 10 is formed of a transparent resin. For example, a focal length as one of the characteristics of the lens 10 changes depending on the temperature of the lens 10. This change in focal length is referred to as a focus shift (or lens shift), and the amount of change is referred to as a focus shift amount (or lens shift amount).

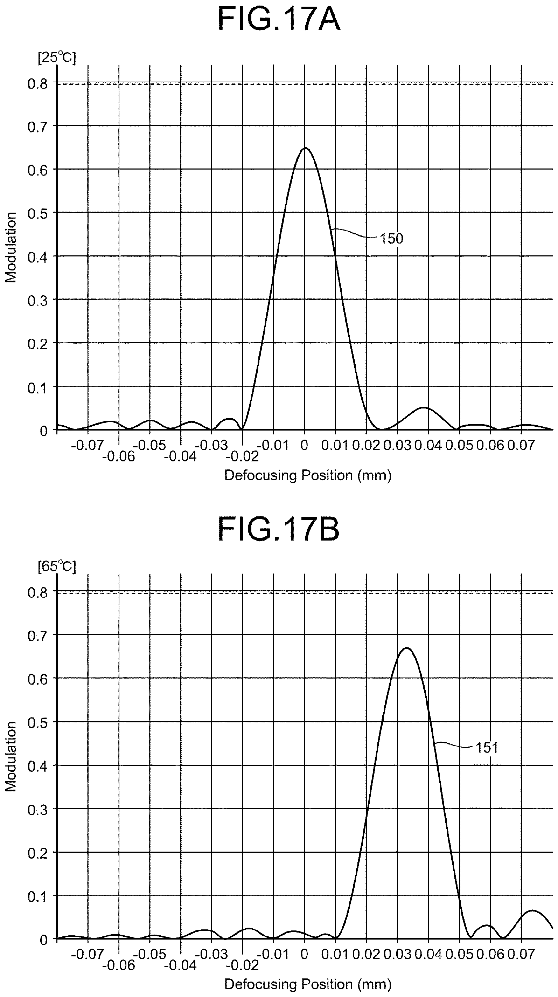

FIGS. 17A and 17B are graphs illustrating examples of simulation results of defocus characteristics of a modulation transfer function (MTF) for the lens 10. FIG. 17A illustrates an example of a case where the temperature of the lens 10 is 25°C, and FIG. 17B illustrates an example of a case where the temperature of the lens 10 is 65°C. The maximum peak position in each of characteristic lines 150 and 151 illustrated in FIGS. 17A and 17B corresponds to an in-focus position. As an example, the in-focus position at 25°C illustrated in FIG. 17A is set as a reference (defocus position = 0 [mm]). In this case, it can be seen in the example of 65°C illustrated in FIG. 17B that the in-focus position is shifted in the positive direction by about 0.03 [mm] as compared with the case of 25°C illustrated in FIG. 17A, and the focus shift occurs.

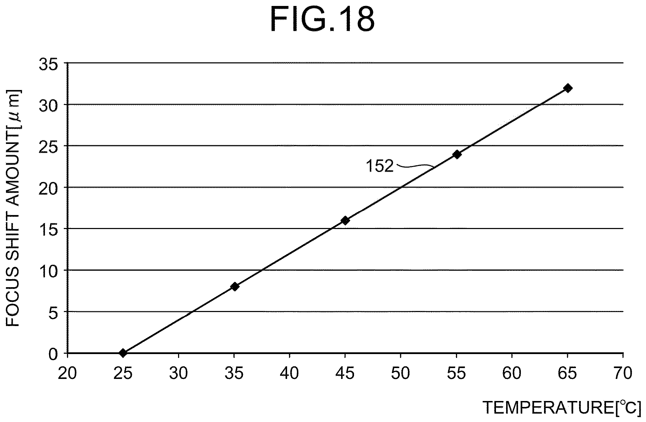

FIG. 18 is a graph illustrating an example of a simulation result of a relationship between the focus shift amount of the lens 10 and the temperature of the lens 10 in a case where the temperature is set with 25°C as a reference in relation to FIGS. 17A and 17B. It can be seen that there is a linear relationship between the focus shift amount and the temperature as indicated by a characteristic line 152 in FIG. 18.

Here, the AF coil 12 is wound around the lens holder 11 holding the lens 10, for example, in the imaging device 1a with reference to FIGS. 1 and 2 and the like. Therefore, it can be considered that a temperature of the AF coil 12 corresponds to the temperature of the lens 10, the temperature of the lens 10 can be known based on the temperature of the AF coil 12, and the focus shift amount in the lens 10 can be predicted based on the temperature of the lens 10.

The temperature of the AF coil 12 can be known by measuring the resistance value $R_{act}$ of the AF coil 12 as already described in the first embodiment. Therefore, the focus shift amount in the lens 10 can be predicted by measuring the resistance value $R_{act}$ of the AF coil 12, and a movement distance of the lens 10 by autofocus can be corrected based on the predicted focus shift amount.

2-2. Configuration Example according to Second Embodiment

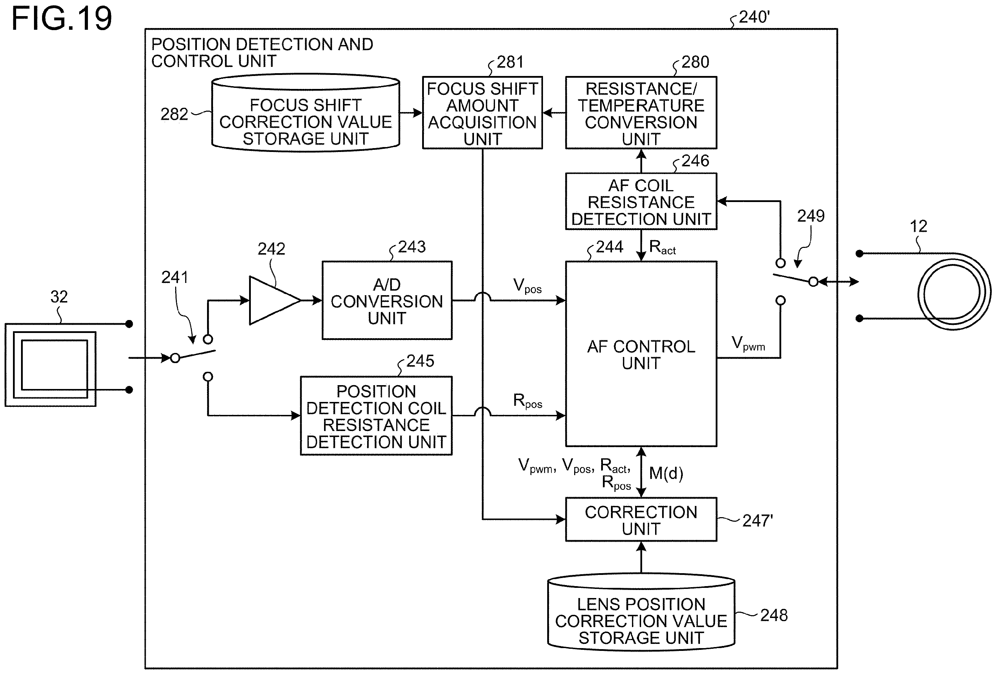

FIG. 19 is a block diagram illustrating a configuration of an example of a position detection and control unit that performs position detection and control of the lens 10 according to the second embodiment. Note that the configuration of the imaging device 1a according to the first embodiment described above can be applied to the second embodiment. The present invention is not limited thereto, and any of the configurations of the imaging devices 1b to 1e according to the first modification to the fourth modification of the first embodiment described above can also be applied.

In FIG. 19, a position detection and control unit 240' has a configuration in which a function for correcting the focus shift is added to the position detection and control unit 240 according to the first embodiment described above. Specifically, in the position detection and control unit 240' illustrated in FIG. 19, a resistance/temperature conversion unit 280, a focus shift amount acquisition unit 281, and a focus shift correction value storage unit 282 are added to the position detection and control unit 240 illustrated in FIG. 8.

The resistance/temperature conversion unit 280 calculates, for example, a temperature value indicating the temperature of the AF coil 12 according to the above-described Formula (2) based on the resistance value $R_{act}$ of the AF coil 12 detected by the AF coil resistance detection unit 246. Alternatively, the resistance/temperature conversion unit 280 may acquire a temperature value of the AF coil 12 using a table in which the resistance value $R_{act}$ and the temperature value of the AF coil 12 are associated with each other. The temperature value of the AF coil 12 calculated by the resistance/temperature conversion unit 280 is delivered to the focus shift amount acquisition unit 281.

The focus shift amount acquisition unit 281 (third detection unit) acquires the focus shift amount of the lens 10 based on the temperature value of the AF coil 12 delivered from the resistance/temperature conversion unit 280. Here, the focus shift amount depending on the temperature value of the lens 10 varies depending on a design of the lens 10. Therefore, a table in which the temperature value of the lens 10 according to the position detection and control unit 240' and the focus shift amount are associated with each other as illustrated in FIG. 18 is stored in advance in the focus shift correction value storage unit 282 in the second embodiment. The focus shift amount acquisition unit 281 acquires the focus shift amount by referring to the table stored in the focus shift correction value storage unit 282 based on the temperature value delivered from the resistance/temperature conversion unit 280.

The focus shift amount acquisition unit 281 delivers the acquired focus shift amount to a correction unit 247'. The correction unit 247' corrects, for example, the target position D of the lens 10 based on the delivered focus shift amount. For example, in a case where the focus shift amount indicates a shift in a direction away from the imaging element 20, the correction unit 247' corrects the target position D to a position distant from the imaging element 20 according to the focus shift amount. The correction unit 247' delivers the corrected target position D to the AF control unit 244.

The AF control unit 244 generates a PWM signal based on the corrected target position D and the position d of the lens 10 to drive the AF coil 12.

Note that the correction unit 247' corrects the target position D based on the focus shift amount in the above description, but this is not limited to this example. For example, the correction unit 247' may correct the position d of the lens 10 based on the focus shift amount, or may correct the target position D and the position d of the lens 10.

In addition, detection and correction processing of the focus shift amount according to the second embodiment is also executed within one frame period (for example, 1/30 [sec]) in synchronization with an imaging timing in the imaging element 20, which is similar to the first embodiment described above. Then, the detection and correction processing is repeatedly executed at a timing of every plurality of frames, for example, every 30 frames, every 15 frames, or the like.

In this manner, the position detection and control unit 240' according to the second embodiment can correct the temperature-dependent focus shift amount of the lens 10 in response to a detection result of the resistance value $R_{act}$ of the AF coil 12. Therefore, autofocus can be executed with higher accuracy.

In addition, the position detection and control unit 240' according to the second embodiment stores the relationship between the focus shift amount and the temperature of the lens 10 in the focus shift correction value storage unit 282, and acquires the focus shift amount of the lens 10 using the stored information. Therefore, it is possible to correct the focus shift amount according to an individual difference of the lens 10.

3. Third Embodiment

Next, a third embodiment of the present disclosure will be described. The third embodiment is an example in which any of the imaging devices 1a to 1e according to the first embodiment and the modifications thereof described above and the second embodiment is applied to an electronic device. Hereinafter, an example in which the imaging device 1a is applied will be described unless otherwise specified.

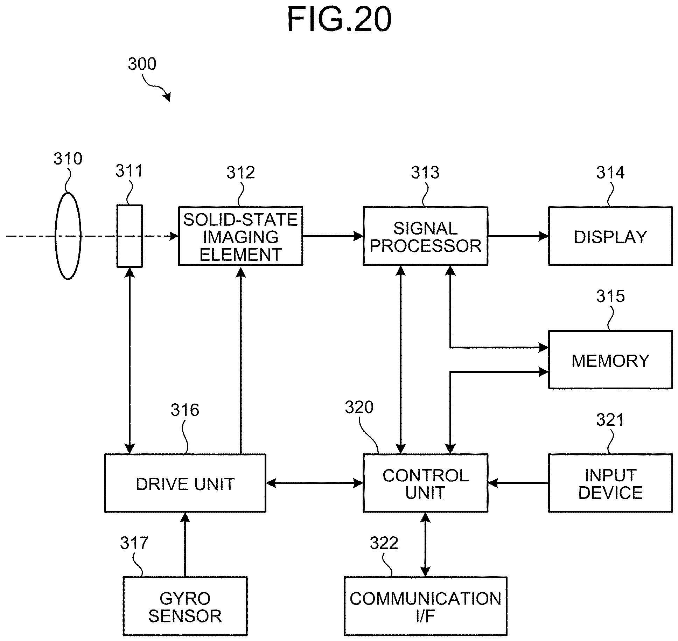

FIG. 20 is a block diagram illustrating a configuration of an example of an electronic device 300 applicable to the third embodiment. The electronic device 300 is, for example, a multifunctional mobile phone terminal (smartphone), and has an imaging function. As the electronic device 300, another electronic device, such as a tablet personal computer, may be applied as long as the electronic device has the imaging function and is configured to be easily carried.

In the example of FIG. 20, the electronic device 300 includes an optical system 310, an optical control unit 311, a solid-state imaging element 312, a signal processor 313, a display 314, a memory 315, a drive unit 316, and a gyro sensor 317, and the electronic device 300 further includes a control unit 320, an input device 321, and a communication I/F 322.

The control unit 320 includes a central processing unit (CPU), a read only memory (ROM), and a random access memory (RAM). The control unit 320 controls the entire operation of the electronic device 300 by the CPU operating using the RAM as a work memory according to a program stored in advance in the ROM. The input device 321 receives a user operation and transmits a control signal corresponding to the received user operation to the control unit 320. The communication I/F 322 communicates with the outside by, for example, wireless communication according to a predetermined protocol under the control of the control unit 320.

The optical system 310 corresponds to the lens 10 and the lens holder 11 described above, includes a lens group including one or a plurality of lenses, guides light (incident light) from a subject to the solid-state imaging element 312, and forms an image on a light receiving surface of the solid-state imaging element 312. The optical control unit 311 is arranged between the optical system 310 and the solid-state imaging element 312. The optical control unit 311 includes a shutter mechanism that controls a light irradiation period and a light shielding period for the solid-state imaging element 312 under the control of the control unit 320. In addition, the optical control unit 311 includes a part of the actuator 13 described above. That is, the AF coil 12, the position detection coil 32, and the OIS coil (not illustrated) are included in the optical control unit 311.

The solid-state imaging element 312 corresponds to the above-described imaging element 20, and stores a signal charge for a certain period in response to light formed on the light receiving surface of the imaging element 20 via the optical system 310 and the shutter mechanism of the optical control unit 311, for example. The signal charge stored in the solid-state imaging element 312 is transferred in accordance with a drive signal (timing signal) supplied from the drive unit 316.

The drive unit 316 outputs a drive signal for controlling a transfer operation of the solid-state imaging element 312 and a shutter operation in the shutter mechanism included in the optical control unit 311 to drive the solid-state imaging element 312 and the shutter mechanism under the control of the control unit 320.

In addition, the drive unit 316 includes the position detection and control unit 240 described with reference to FIG. 8. The drive unit 316 detects a position of the lens 10 (lens holder 11) based on outputs of the AF coil 12 and the position detection coil 32 included in the optical control unit 311, and achieves an autofocus function based on a detection result. At this time, the drive unit 316 measures the resistance values $R_{act}$ and $R_{pos}$ of the AF coil 12 and the position detection coil 32, and can correct the position of the lens 10 (lens holder 11) based on the measured resistance values $R_{act}$ and $R_{pos}$. As a result, it is possible to realize more accurate autofocus.

In addition, the drive unit 316 can realize a camera shake correction function by driving each OIS coil included in the optical control unit 311 according to the signal from the gyro sensor 317. Note that the position detection and control unit 240 may be included in the control unit 320.

The signal processor 313 performs various types of signal processing such as correlated double sampling (CDS) on the signal charge output from the solid-state imaging element 312, and generates image data in response to the signal charge under the control of the control unit 320. In addition, the signal processor 313 can display image data obtained by performing the signal processing on the display 314 and store the image data in the memory 315 under the control of the control unit 320.

The control unit 320 can transmit the image data stored in the memory 315 to the outside by the communication I/F 322 according to the user operation on the input device 321.

The electronic device 300 configured as described above can detect a position of the optical system 310 by the AF operation by applying any of the imaging devices 1a to 1e described above as the optical system 310 and the solid-state imaging element 312. At this time, the electronic device 300 can measure the resistance values $R_{act}$ and $R_{pos}$ of the AF coil 12 and the position detection coil 32, and correct the detected position and target position of the optical system 310 based on the measured resistance values $R_{act}$ and $R_{pos}$. As a result, the AF operation with higher accuracy can be performed.

Note that the description has been given here assuming that the imaging devices 1a to 1e according to the present disclosure are applicable to the electronic device 300, such as the smartphone and the tablet personal computer, having the imaging function. The present invention is not limited to this example, and the imaging devices 1a to 1e according to the present disclosure can be applied to a digital video camera and a digital still camera. In addition, the imaging devices 1a to 1e according to the present disclosure can also be applied to image input cameras such as a surveillance camera and an in-vehicle camera. In addition, the imaging devices 1a to 1e according to the present disclosure can also be used for electronic devices such as a scanner device, a facsimile device, and a television telephone device.

4. Fourth Embodiment

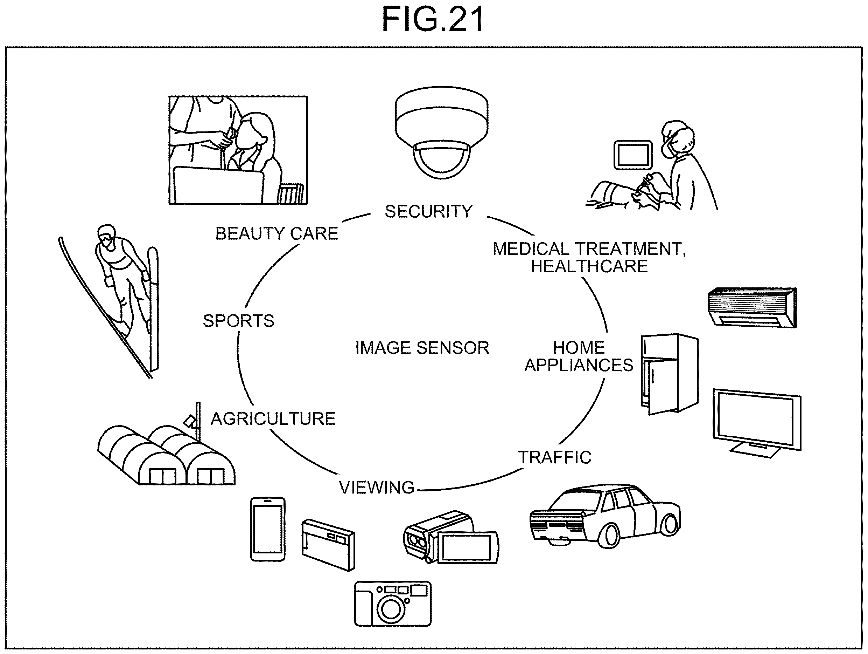

Next, as a fourth embodiment, application examples of the imaging devices 1a to 1e in the first embodiment and the modifications thereof and the second embodiment according to the present disclosure will be described. FIG. 21 is a diagram illustrating usage examples of the imaging devices 1a to 1e according to the first embodiment and the modifications thereof and the second embodiment described above.

The above-described respective imaging devices 1a to 1e can be used in various cases for sensing light such as visible light, infrared light, ultraviolet light, and X-ray as will be described below.

· A device that captures an image used for viewing, such as a digital camera and a mobile device with a camera function.
· A device used for traffic, such as in-vehicle sensors that capture the front, rear, surroundings, interior, and the like of an automobile in order for safe driving such as automatic stop and recognition of a driver's condition, a surveillance camera that monitors a traveling vehicle and a road, and a distance measurement sensor that measures a distance between vehicles.

· A device used in home appliances, such as a TV, a refrigerator, and an air conditioner to capture a user's gesture and operate the device according to the gesture.

· A device used for medical treatment and healthcare, such as an endoscope and a device that performs angiography by receiving infrared light.

· A device used for security, such as a surveillance camera for crime prevention and a camera for personal authentication.

· A device used for beauty care, such as a skin measuring device that captures a skin and a microscope that captures a scalp.

· A device used for sports, such as an action camera and a wearable camera for sports applications.

· A device used for agriculture, such as a camera for monitoring conditions of a field and a crop.

5. Additional Application Examples of Technology according to Present Disclosure

The technology according to the present disclosure (the present technology) can be applied to various products. For example, the technology according to the present disclosure may be applied to an endoscopic surgery system.

5-1. Application Example to In-Vivo Information Acquisition System

FIG. 27 is a block diagram illustrating an example of a schematic configuration of a patient in-vivo information acquisition system using a capsule endoscope to which the technology according to the present disclosure (the present technology) can be applied.

An in-vivo information acquisition system 10001 includes a capsule endoscope 10100 and an external control device 10200.

The capsule endoscope 10100 is swallowed by a patient at the time of examination. The capsule endoscope 10100 has an imaging function and a wireless communication function, sequentially captures images of the inside of organs (hereinafter, also referred to as in-vivo images) at predetermined intervals while moving inside the organs such as the stomach and the intestines by peristaltic movement or the like until being naturally discharged from the patient, and sequentially transmits information regarding the in-vivo images to the external control device 10200 outside the body in a wireless manner.

The external control device 10200 integrally controls the operation of the in-vivo information acquisition system 10001. In addition, the external control device 10200 receives the information regarding the in-vivo image transmitted from the capsule endoscope 10100, and generates image data for displaying the in-vivo image on a display device (not illustrated) based on the received information regarding the in-vivo image.

In this manner, the in-vivo information acquisition system 10001 can obtain the in-vivo image obtained by imaging a state of the inside of the patient's body at any time between swallowing and discharging of the capsule endoscope 10100.

Configurations and functions of the capsule endoscope 10100 and the external control device 10200 will be described in more detail.

The capsule endoscope 10100 includes a capsule casing 10101. A light source unit 10111, an imaging unit 10112, an image processor 10113, a wireless communication unit 10114, a power feeding unit 10115, a power supply unit 10116, and a control unit 10117 are housed in the casing 10101.

The light source unit 10111 includes a light source such as a light emitting diode (LED), for example, and irradiates an imaging field of view of the imaging unit 10112 with light.

The imaging unit 10112 includes an imaging element and an optical system including a plurality of lenses provided in front of the imaging element. Reflection light (hereinafter, referred to as observation light) of light applied to a body tissue, which is an observation target, is collected by the optical system and is incident on the imaging element. In the imaging unit 10112, the observation light incident on the imaging element is photoelectrically converted, and an image signal corresponding to the observation light is generated. The image signal generated by the imaging unit 10112 is provided to the image processor 10113.

The image processor 10113 includes a processor such as a CPU or a graphics processing unit (GPU), and performs various types of signal processing on the image signal generated by the imaging unit 10112. The image processor 10113 provides the image signal subjected to the signal processing to the wireless communication unit 10114 as RAW data.

The wireless communication unit 10114 performs predetermined processing, such as modulation processing, on the image signal on which the signal processing has been performed by the image processor 10113, and transmits the image signal to the external control device 10200 via an antenna 10114A. In addition, the wireless communication unit 10114 receives a control signal related to drive control of the capsule endoscope 10100 from the external control device 10200 via the antenna 10114A. The wireless communication unit 10114 provides the control unit 10117 with the control signal received from the external control device 10200.

The power feeding unit 10115 includes a power reception antenna coil, a power regeneration circuit that regenerates power from a current generated in the antenna coil, a booster circuit, and the like. In the power feeding unit 10115, power is generated using a so-called non-contact charging principle.

The power supply unit 10116 includes a secondary battery, and stores the power generated by the power feeding unit 10115. FIG. 27 does not illustrate an arrow or the like indicating a supply destination of the power from the power supply unit 10116 in order to avoid complication of the drawing, but the power stored in the power supply unit 10116 is supplied to the light source unit 10111, the imaging unit 10112, the image processor 10113, the wireless communication unit 10114, and the control unit 10117, and can be used to drive these units.

The control unit 10117 includes a processor such as a CPU, and appropriately controls the driving of the light source unit 10111, the imaging unit 10112, the image processor 10113, the wireless communication unit 10114, and the power feeding unit 10115 according to the control signal transmitted from the external control device 10200.

The external control device 10200 includes a processor such as a CPU and a GPU, or a microcomputer, a control board, or the like on which a processor and a storage element, such as a memory, are mixedly mounted. The external control device 10200 controls the operation of the capsule endoscope 10100 by transmitting the control signal to the control unit 10117 of the capsule endoscope 10100 via an antenna 10200A. In the capsule endoscope 10100, for example, a light irradiation condition for the observation target in the light source unit 10111 can be changed by the control signal from the external control device 10200. In addition, an imaging condition (for example, a frame rate, an exposure value, or the like in the imaging unit 10112) can be changed by the control signal from the external control device 10200. In addition, content of processing in the image processor 10113 and a condition (for example, a transmission interval, the number of transmission images, or the like) under which the wireless communication unit 10114 transmits the image signal may be changed by the control signal from the external control device 10200.

In addition, the external control device 10200 performs various types of image processing on the image signal transmitted from the capsule endoscope 10100, and generates image data for displaying the captured in-vivo image on the display device. As the image processing, for example, various types of signal processing such as development processing (demosaic processing), image quality enhancement processing (band emphasis processing, super-resolution processing, noise reduction processing, camera shake correction processing, or the like), and enlargement processing (electronic zoom processing) can be performed alone or in combination. The external control device 10200 controls driving of the display device to display the captured in-vivo image based on the generated image data. Alternatively, the external control device 10200 may cause a recording device (not illustrated) to record the generated image data or cause a printing device (not illustrated) to print out the generated image data.

An example of the in-vivo information acquisition system to which the technology according to the present disclosure can be applied has been described above. The technology according to the present disclosure can be applied to, for example, the imaging unit 10112 among the configurations described above. Specifically, the configuration for measuring the resistance value $R_{pos}$ of the position detection coil 32 for detection of the position of the lens 10 (lens holder 11) and the configuration for measuring the resistance value $R_{act}$ of the AF coil 12 for movement of the lens 10 (lens holder 11) in the Z-axis direction in each of the imaging devices 1a to 1e described above can be applied to the imaging unit 10112. Then, the configuration for correcting the detected position of the lens 10 (lens holder 11) and the target position based on the resistance values $R_{pos}$ and $R_{act}$ can be applied to the imaging unit 10112. As a result, it is possible to realize a more accurate autofocus function in which the influence of the temperature change of the imaging unit 10112 is suppressed.

5-2. Application Example to Endoscopic Surgery System

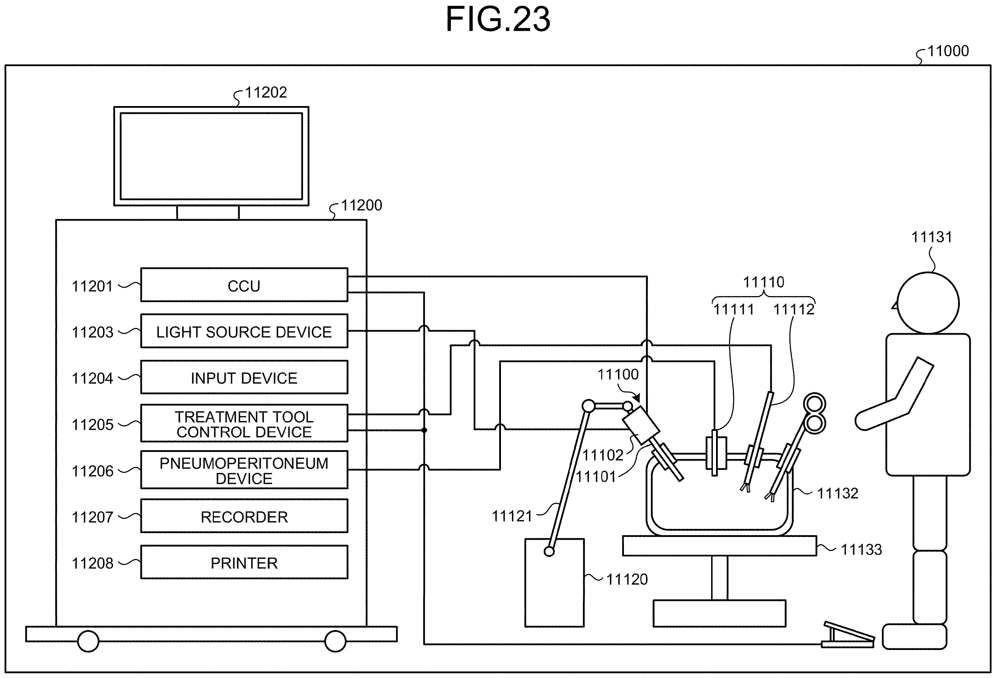

The technology according to the present disclosure may be further applied to an endoscopic surgery system. FIG. 23 is a diagram illustrating an example of a schematic configuration of the endoscopic surgery system to which the technology according to the present disclosure (the present technology) can be applied.

FIG. 23 illustrates a state where a surgeon (doctor) 11131 performs surgery on a patient 11132 on a patient bed 11133 using an endoscopic surgery system 11000. As illustrated, the endoscopic surgery system 11000 includes an endoscope 11100, other surgical tools 11110, such as a pneumoperitoneum tube 11111 and an energy treatment tool 11112, a support arm device 11120 that supports the endoscope 11100, and a cart 11200 equipped with various devices for endoscopic surgery.

The endoscope 11100 includes a lens barrel 11101 in which a region having a predetermined length from a distal end is inserted into a body cavity of the patient 11132 and a camera head 11102 connected to a proximal end of the lens barrel 11101. In the illustrated example, the endoscope 11100 configured as a so-called rigid mirror having the rigid lens barrel 11101 is illustrated, but the endoscope 11100 may be configured as a so-called flexible mirror having a flexible lens barrel.

The distal end of the lens barrel 11101 is provided with an opening in which an objective lens has been fitted. A light source device 11203 is connected to the endoscope 11100, and light generated by the light source device 11203 is guided to the distal end of the lens barrel by a light guide extending inside the lens barrel 11101 and is emitted toward an observation target in the body cavity of the patient 11132 through the objective lens. Note that the endoscope 11100 may be a direct-viewing endoscope, or may be an oblique-viewing endoscope or a side-viewing endoscope.

An optical system and an imaging element are provided inside the camera head 11102, and light (observation light) reflected from the observation target is collected on the imaging element by the optical system. The observation light is photoelectrically converted by the imaging element so that an electrical signal corresponding to the observation light, that is, an image signal corresponding to an observation image is generated. The image signal is transmitted to a camera control unit (CCU) 11201 as RAW data.

The CCU 11201 includes a CPU, a GPU, and the like, and integrally controls operations of the endoscope 11100 and a display device 11202. Further, the CCU 11201 receives an image signal from the camera head 11102 and performs various types of image processing to display an image based on the image signal, such as development processing (demosaic processing), on the image signal.

The display device 11202 displays an image based on the image signal processed by the CCU 11201 under the control of the CCU 11201.

The light source device 11203 is configured using, for example, a light source such as a light emitting diode (LED), and supplies irradiation light at the time of capturing a surgical site or the like to the endoscope 11100.

An input device 11204 is an input interface with respect to the endoscopic surgery system 11000. A user can input various types of information and input instructions to the endoscopic surgery system 11000 via the input device 11204. For example, the user inputs an instruction to change an imaging condition (a type of irradiation light, a magnification, a focal length, or the like) of the endoscope 11100.

A treatment tool control device 11205 controls driving of the energy treatment tool 11112 configured for ablation of a tissue, incision, sealing of a blood vessel, and the like. A pneumoperitoneum device 11206 delivers a gas into the body cavity through the pneumoperitoneum tube 11111 to inflate the body cavity of the patient 11132 for the purpose of securing the field of view for the endoscope 11100 and securing a work space of the surgeon. A recorder 11207 is a device that can record various types of information related to surgery. A printer 11208 is a device capable of printing various types of information related to surgery in various formats such as text, an image, and a graph.

Note that the light source device 11203 that supplies the irradiation light to the endoscope 11100 at the time of capturing the surgical site can be configured using, for example, an LED, a laser light source, or a white light source configured by a combination thereof. When the white light source is configured by a combination of RGB laser light sources, the output intensity and output timing of each color (each wavelength) can be controlled with high accuracy, and thus, the white balance of a captured image can be adjusted by the light source device 11203. In addition, in this case, an observation target is irradiated with laser light from each of the RGB laser light sources in a time-division manner, and driving of the imaging element of the camera head 11102 is controlled in synchronization with the irradiation timing, so that it is also possible to capture images corresponding to R, G, and B in a time-division manner. According to this method, a color image can be obtained without providing a color filter on the imaging element.

In addition, the driving of the light source device 11203 may be controlled so as to change the intensity of output light at predetermined time intervals. When images are acquired in a time-division manner by controlling the driving of the imaging element of the camera head 11102 in synchronization with the timing of the change of the light intensity and the images are combined, it is possible to generate an image having a high dynamic range without so-called blackout and whiteout.

In addition, the light source device 11203 may be configured to be capable of supplying light in a predetermined wavelength band corresponding to special light observation. The special light observation performs so-called narrow band imaging that captures a predetermined tissue, such as a blood vessel in a mucosal surface layer, with high contrast by using, for example, the wavelength dependence of light absorption in a body tissue and emitting light in a narrower band than irradiation light (that is, white light) at the time of normal observation. Alternatively, the special light observation may perform fluorescence observation that obtains an image by fluorescence generated by emitting excitation light. The fluorescence observation can observe fluorescence from a body tissue by emitting the excitation light to the body tissue (autofluorescence observation), obtain a fluorescent image by performing local injection of a reagent such as indocyanine green (ICG) into a body tissue and emitting excitation light corresponding to a fluorescence wavelength of the reagent to the body tissue, or the like. The light source device 11203 may be configured to be capable of supplying narrowband light and/or excitation light compatible with such special light observation.

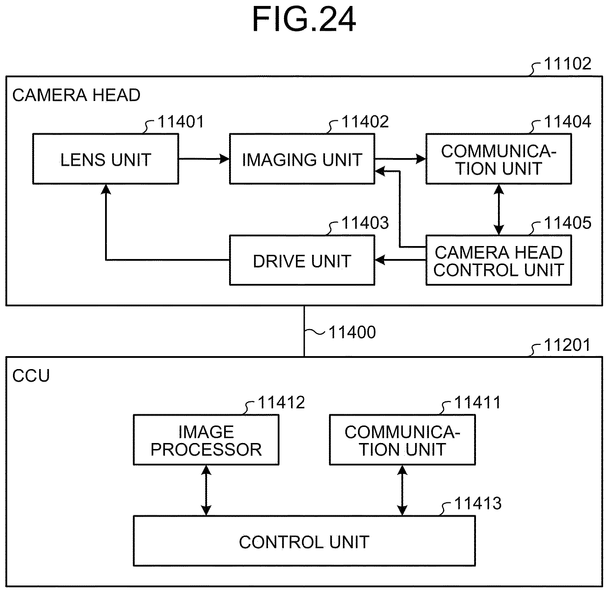

FIG. 24 is a block diagram illustrating an example of functional configurations of the camera head 11102 and the CCU 11201 illustrated in FIG. 23.

The camera head 11102 includes a lens unit 11401, an imaging unit 11402, a drive unit 11403, a communication unit 11404, and a camera head control unit 11405. The CCU 11201 has a communication unit 11411, an image processor 11412, and a control unit 11413. The camera head 11102 and the CCU 11201 are connected via a transmission cable 11400 to be capable of performing communication with each other.

The lens unit 11401 is an optical system provided at a connection portion with the lens barrel 11101. Observation light taken in from the distal end of the lens barrel 11101 is guided to the camera head 11102 and incident on the lens unit 11401. The lens unit 11401 is configured by combining a plurality of lenses including a zoom lens and a focus lens.

The imaging unit 11402 is configured using an imaging element. The imaging element forming the imaging unit 11402 may be one (a so-called single plate type) or plural (a so-called multi-plate type) in number. When the imaging unit 11402 is of the multi-plate type, for example, image signals corresponding to R, G, and B may be generated by the respective imaging elements and combined to obtain a color image. Alternatively, the imaging unit 11402 may include a pair of imaging elements configured to acquire right-eye and left-eye image signals compatible with three-dimensional (3D) display. The 3D display enables the surgeon 11131 to more accurately grasp the depth of a living tissue in a surgical site. Note that a plurality of the lens units 11401 corresponding to the imaging elements can be provided when the imaging unit 11402 is of the multi-plate type.

In addition, the imaging unit 11402 is not necessarily provided on the camera head 11102. For example, the imaging unit 11402 may be provided inside the lens barrel 11101 immediately behind the objective lens.

The drive unit 11403 is configured using an actuator, and moves the zoom lens and the focus lens of the lens unit 11401 by a predetermined distance along an optical axis under the control of the camera head control unit 11405. As a result, the magnification and the focus of an image captured by the imaging unit 11402 can be adjusted as appropriate.

The communication unit 11404 is configured using a communication device for transmission and reception of various types of information to and from the CCU 11201. The communication unit 11404 transmits an image signal obtained from the imaging unit 11402 as RAW data to the CCU 11201 via the transmission cable 11400.

In addition, the communication unit 11404 receives a control signal to control driving of the camera head 11102 from the CCU 11201, and supplies the control signal to the camera head control unit 11405. Examples of the control signal include information associated with imaging conditions such as information to specify a frame rate of a captured image, information to specify an exposure value at the time of capturing, and/or information to specify the magnification and focus of a captured image.

Note that the above imaging conditions such as the frame rate, the exposure value, the magnification, and the focus may be specified by a user as appropriate, or may be set automatically by the control unit 11413 of the CCU 11201 based on the acquired image signal. In the latter case, so-called auto exposure (AE) function, auto focus (AF) function, and auto white balance (AWB) function are installed in the endoscope 11100.

The camera head control unit 11405 controls driving of the camera head 11102 based on the control signal from the CCU 11201 received via the communication unit 11404.

The communication unit 11411 is configured using a communication device for transmission and reception of various types of information to and from the camera head 11102. The communication unit 11411 receives an image signal transmitted from the camera head 11102 via the transmission cable 11400.

In addition, the communication unit 11411 transmits a control signal to control driving of the camera head 11102 to the camera head 11102. The image signal and the control signal can be transmitted by telecommunication, optical communication, or the like.

The image processor 11412 performs various types of image processing on the image signal which is the RAW data transmitted from the camera head 11102.

The control unit 11413 performs various types of control related to capturing of a surgical site or the like by the endoscope 11100 and display of a captured image obtained by the capturing of the surgical site or the like. For example, the control unit 11413 generates a control signal to control driving of the camera head 11102.

In addition, the control unit 11413 causes the display device 11202 to display a captured image including a surgical site or the like based on an image signal subjected to image processing by the image processor 11412. At this time, the control unit 11413 may recognize various objects in the captured image using various image recognition techniques. For example, the control unit 11413 can recognize a surgical tool such as a forceps, a specific body site, bleeding, mist at the time of using the energy treatment tool 11112, and the like by detecting a shape, a color, or the like of an edge of an object included in the captured image. When causing the display device 11202 to display the captured image, the control unit 11413 may use a result of the recognition to superimpose various types of surgical support information on the image of the surgical site. Since the surgical support information is superimposed and presented to the surgeon 11131, it is possible to mitigate the burden on the surgeon 11131 and to allow the surgeon 11131 to reliably proceed with surgery.

The transmission cable 11400 that connects the camera head 11102 and the CCU 11201 is an electrical signal cable compatible with communication of an electrical signal, an optical fiber compatible with optical communication, or a composite cable thereof.

Here, the communication is performed in a wired manner using the transmission cable 11400 in the example of FIG. 24, but the communication between the camera head 11102 and the CCU 11201 may be performed wirelessly.

An example of the endoscopic surgery system to which the technology according to the present disclosure can be applied has been described above. The technology according to the present disclosure can be applied, for example, to the endoscope 11100 and the imaging unit 11402 of the camera head 11102 among the configurations described above. Specifically, the configuration for measuring the resistance value $R_{pos}$ of the position detection coil 32 for detection of the position of the lens 10 (lens holder 11) and the configuration for measuring the resistance value $R_{act}$ of the AF coil 12 for movement of the lens 10 (lens holder 11) in the Z-axis direction in each of the imaging devices 1a to 1e described above can be applied to the imaging unit 10112. Then, the configuration for correcting the detected position of the lens 10 (lens holder 11) and the target position based on the resistance values $R_{pos}$ and $R_{act}$ can be applied to the imaging unit 11402. As a result, it is possible to realize a more accurate autofocus function in which the influence of the temperature change of the imaging unit 11402 is suppressed.

Note that the endoscopic surgery system has been described here as an example, but the technology according to the present disclosure may be applied to, for example, a microscopic surgery system or the like.

5-3. Application Example to Moving Object

The technology according to the present disclosure may be further applied to a device mounted on various moving objects such as an automobile, an electric vehicle, a hybrid electric vehicle, a motorcycle, a bicycle, a personal mobility, an airplane, a drone, a ship, and a robot.

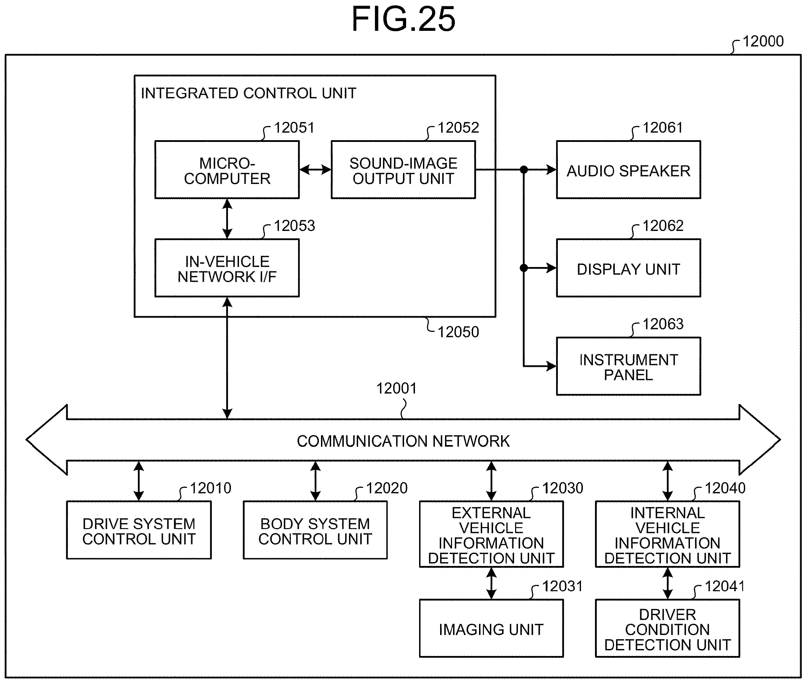

FIG. 25 is a block diagram illustrating a schematic configuration example of a vehicle control system, which is an example of a moving object control system to which the technology according to the present disclosure can be applied.

A vehicle control system 12000 includes a plurality of electronic control units connected via a communication network 12001. In the example illustrated in FIG. 25, the vehicle control system 12000 includes a drive system control unit 12010, a body system control unit 12020, an external vehicle information detection unit 12030, an internal vehicle information detection unit 12040, and an integrated control unit 12050. In addition, as a functional configuration of the integrated control unit 12050, a microcomputer 12051, a sound-image output unit 12052, and an in-vehicle network interface (I/F) 12053 are illustrated.

The drive system control unit 12010 controls operations of devices related to a drive system of a vehicle according to various programs. For example, the drive system control unit 12010 functions as a control device of a driving force generation device, such as an internal combustion engine and a driving motor, configured to generate a driving force of the vehicle, a driving force transmitting mechanism configured to transmit the driving force to wheels, a steering mechanism that adjusts a steering angle of the vehicle, a braking device that generates a braking force of the vehicle, and the like.

The body system control unit 12020 controls operations of various devices mounted on a vehicle body according to various programs. For example, the body system control unit 12020 functions as a control device of a keyless entry system, a smart key system, a power window device, or various lamps such as a head lamp, a back lamp, a brake lamp, a turn signal, and a fog lamp. In this case, the body system control unit 12020 can receive input of radio waves transmitted from a portable device substituted for a key or signals of various switches. The body system control unit 12020 receives input of these radio waves or signals to control a door lock device, the power window device, the lamps, or the like of the vehicle.

The external vehicle information detection unit 12030 detects information regarding the outside of the vehicle on which the vehicle control system 12000 is mounted. For example, an imaging unit 12031 is connected to the external vehicle information detection unit 12030. The external vehicle information detection unit 12030 causes the imaging unit 12031 to capture an image of the outside of the vehicle and receives the captured image. The external vehicle information detection unit 12030 may perform object detection processing or distance detection processing of a person, a car, an obstacle, a sign, a character on a road surface, or the like based on the received image. The external vehicle information detection unit 12030 performs image processing on the received image, and performs the object detection processing or distance detection processing based on a result of the image processing, for example.

The imaging unit 12031 is an optical sensor that receives light and outputs an electrical signal according to the amount of the received light. The imaging unit 12031 can output the electrical signal as an image and also as ranging information. In addition, the light received by the imaging unit 12031 may be visible light or invisible light such as infrared light.

The internal vehicle information detection unit 12040 detects internal vehicle information. The internal vehicle information detection unit 12040 is connected with a driver condition detection unit 12041 that detects a condition of a driver, for example. The driver condition detection unit 12041 includes a camera that captures an image of the driver, for example, and the internal vehicle information detection unit 12040 may calculate a degree of fatigue or a degree of concentration of the driver or may determine whether the driver is dozing off based on detection information input from the driver condition detection unit 12041.

The microcomputer 12051 can calculate a control target value of the driving force generation device, the steering mechanism, or the braking device based on the information regarding the inside or outside of the vehicle acquired by the external vehicle information detection unit 12030 or the internal vehicle information detection unit 12040, and output a control command to the drive system control unit 12010. For example, the microcomputer 12051 can perform cooperative control for the purpose of implementing a function of an advanced driver assistance system (ADAS) including collision avoidance or impact mitigation for the vehicle, travel following a vehicle ahead based on an inter-vehicle distance, constant speed travel, a vehicle collision warning, a warning for the vehicle deviating a lane, or the like.

In addition, the microcomputer 12051 can perform cooperative control for the purpose of automated driving or the like with which the vehicle travels autonomously without depending on the driver's operation by controlling the driving force generation device, the steering mechanism, the braking device, or the like based on information regarding the surroundings of the vehicle acquired by the external vehicle information detection unit 12030 or the internal vehicle information detection unit 12040.

In addition, the microcomputer 12051 can output a control command to the body system control unit 12020 based on the information regarding the outside of the vehicle acquired by the external vehicle information detection unit 12030. For example, the microcomputer 12051 can perform cooperative control for the purpose of anti-glare such as switching from a high beam to a low beam by controlling a head lamp depending on a position of a vehicle ahead or an oncoming vehicle detected by the external vehicle information detection unit 12030.

The sound-image output unit 12052 transmits an output signal of at least one of a sound or an image to an output device that can visually or aurally provide notification of information to a passenger of the vehicle or the outside of the vehicle. In the example of FIG. 25, an audio speaker 12061, a display unit 12062, and an instrument panel 12063 are exemplified as the output device. The display unit 12062 may include at least one of an on-board display and a head-up display, for example.

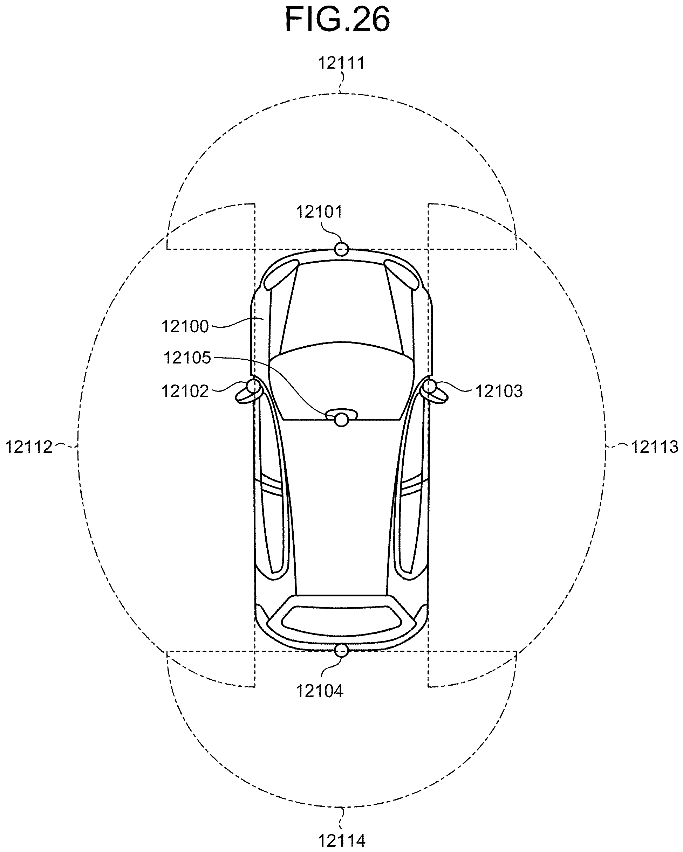

FIG. 26 is a view illustrating an example of an installation position of the imaging unit 12031. In FIG. 26, a vehicle 12100 has imaging units 12101, 12102, 12103, 12104, and 12105 as the imaging unit 12031.

The imaging units 12101, 12102, 12103, 12104, and 12105 are installed at positions such as a front nose, side mirrors, a rear bumper, a back door, and an upper part of a windshield in a passenger compartment of the vehicle 12100, for example. The imaging unit 12101 installed at the front nose and the imaging unit 12105 installed in the upper part of the windshield in the passenger compartment mainly acquire an image of an area in front of the vehicle 12100. The imaging units 12102 and 12103 installed on the side mirrors mainly acquire images of the sides of the vehicle 12100. The imaging unit 12104 installed on the rear bumper or the back door mainly acquires an image of an area behind the vehicle 12100. The image of the area in front of the vehicle acquired by the imaging units 12101 and 12105 is mainly used to detect a vehicle ahead or a pedestrian, an obstacle, a traffic light, a traffic sign, a lane, or the like.

Note that FIG. 26 illustrates an example of capturing ranges of the imaging units 12101 to 12104. An imaging range 12111 indicates an imaging range of the imaging unit 12101 provided on the front nose, imaging ranges 12112 and 12113 indicate imaging ranges of the imaging units 12102 and 12103 provided on the side mirrors, respectively, and an imaging range 12114 indicates an imaging range of the imaging unit 12104 provided on the rear bumper or the back door. For example, a bird's-eye view image of the vehicle 12100 viewed from above can be obtained by superimposing image data captured by the imaging units 12101 to 12104.

At least one of the imaging units 12101 to 12104 may have a function of acquiring distance information. For example, at least one of the imaging units 12101 to 12104 may be a stereo camera including a plurality of imaging elements, or may be an imaging element having pixels for phase difference detection.

For example, the microcomputer 12051 obtains a distance to each three-dimensional object within the imaging ranges 12111 to 12114 and a temporal change in the distance (relative speed with respect to the vehicle 12100) based on the distance information obtained from the imaging units 12101 to 12104, and thus, can particularly extract, as a vehicle ahead, a three-dimensional object that is closest on a path of travel of the vehicle 12100 and travels at a predetermined speed (for example, 0 km/h or faster) in substantially the same direction as that of the vehicle 12100. Further, the microcomputer 12051 can set an inter-vehicle distance to be secured in advance behind the vehicle ahead, and perform automatic brake control (including follow-up stop control), automatic acceleration control (including follow-up start control), and the like. In this manner, it is possible to perform the cooperative control for the purpose of automated driving or the like for autonomous traveling without depending on the driver's operation.

For example, the microcomputer 12051 classifies three-dimensional object data relating to a three-dimensional object into a two-wheeled vehicle, a standard sized vehicle, a large sized vehicle, a pedestrian, and other three-dimensional objects such as a utility pole, and extracts the data for use in automatic avoidance of an obstacle based on the distance information obtained from the imaging units 12101 to 12104. For example, the microcomputer 12051 distinguishes obstacles in the vicinity of the vehicle 12100 as an obstacle that can be visually recognized by the driver of the vehicle 12100 or an obstacle that is difficult to be visually recognized by the driver. Then, the microcomputer 12051 determines a collision risk indicating the degree of risk of collision with each obstacle, and can perform driver assistance to avoid the collision in a situation where there is a possibility of the collision with the collision risk equal to or higher than a set value by outputting an alarm to the driver via the audio speaker 12061 and/or the display unit 12062 or performing forced deceleration or evasive steering via the drive system control unit 12010.

At least one of the imaging units 12101 to 12104 may be an infrared camera that detects infrared light. For example, the microcomputer 12051 can recognize a pedestrian by determining whether the pedestrian is present in

**EP 4 009 102 B1**

images captured by the imaging units 12101 to 12104. Such pedestrian recognition is performed by a procedure of extracting feature points in the images captured by the imaging units 12101 to 12104, which are infrared cameras, for example, and a procedure of performing pattern matching on a series of feature points indicating an outline of an object and determining whether the object corresponds to the pedestrian. When the microcomputer 12051 determines that the pedestrian is present in the images captured by the imaging units 12101 to 12104 and recognizes the pedestrian, the sound-image output unit 12052 controls the display unit 12062 such that a rectangular contour for emphasis is superimposed and displayed on the recognized pedestrian. In addition, the sound-image output unit 12052 may also control the display unit 12062 to display an icon or the like indicating the pedestrian at a desired position.

An example of the vehicle control system to which the technology according to the present disclosure can be applied has been described above. The technology according to the present disclosure can be applied to, for example, the imaging unit 12031 among the configurations described above.

Specifically, the configuration for measuring the resistance value $R_{pos}$ of the position detection coil 32 for detection of the position of the lens 10 (lens holder 11) and the configuration for measuring the resistance value $R_{act}$ of the AF coil 12 for movement of the lens 10 (lens holder 11) in the Z-axis direction in each of the imaging devices 1a to 1e described above can be applied to the imaging unit 12031. Then, the configuration for correcting the detected position of the lens 10 (lens holder 11) and the target position based on the resistance values $R_{pos}$ and $R_{act}$ can be applied to the imaging unit 12031. As a result, it is possible to realize a more accurate autofocus function in which the influence of the temperature change of the imaging unit 10112 is suppressed.

In a case where the imaging unit 12031 is used for the purpose of being mounted on a vehicle, it is conceivable that the imaging unit 12031 becomes extremely high in temperature due to solar radiation regardless of whether the imaging unit 12031 is installed inside or outside the vehicle. In addition, it is also conceivable that the imaging unit 12031 becomes extremely low in temperature, for example, in winter. As the technology according to the present disclosure is applied to the imaging unit 12031, it is possible to realize a more accurate autofocus function in which the influence of the temperature change of the imaging unit 12031 is suppressed even in an environment where such a large temperature change is expected.

Note that the effects described in the present specification are merely examples and are not restrictive of the disclosure herein, and other effects not described herein also can be achieved.

Reference Signs List

1a, 1b, 1c, 1d, 1e IMAGING DEVICE
10 LENS
11 LENS HOLDER
12 AF COIL
13 ACTUATOR
20 IMAGING ELEMENT
21 CIRCUIT BOARD
24 CONTROL CIRCUIT
30 SPACER
32 POSITION DETECTION COIL
34 OPENING
131, 240, 240' POSITION DETECTION AND CONTROL UNIT
244 AF CONTROL UNIT
245 POSITION DETECTION COIL RESISTANCE DETECTION UNIT
246 AF COIL RESISTANCE DETECTION UNIT
247, 247' CORRECTION UNIT
248 LENS POSITION CORRECTION VALUE STORAGE UNIT
252 DETECTOR
253 CURRENT SOURCE
254, 263, 264 RESISTANCE
261 SIGNAL SELECTION UNIT
262 SUBTRACTION UNIT
280 RESISTANCE/TEMPERATURE CONVERSION UNIT
281 FOCUS SHIFT AMOUNT ACQUISITION UNIT
282 FOCUS SHIFT CORRECTION VALUE STORAGE UNIT

24

**Claims**

1. An imaging device (1a) comprising:

   a first detection unit (246) that is configured to detect a first resistance value of a drive coil (12) included in an actuator (13) that is configured to drive a lens (10) collecting subject light;
   a correction value generation unit (247) that is configured to generate a correction value for a position of the lens (10) based on the first resistance value, and **characterized in that** it further comprises
   a second detection unit (245) that is configured to detect a second resistance value of a position detection coil (32) configured to detect the position of the lens (10), wherein
   the correction value generation unit (247) is configured to generate the correction value based on the first resistance value and the second resistance value.

2. The imaging device (1a) according to claim 1, further comprising

   a third detection unit (281) that is configured to detect a focus shift amount of the lens (10) based on the first resistance value, wherein
   the correction value generation unit (247) is configured to generate the correction value further using the focus shift amount detected by the third detection unit (281).

3. The imaging device (1a) according to claim 2, further comprising:

   a conversion unit (243) that is configured to convert the first resistance value into a temperature value; and
   a storage unit (25) that is configured to store a table in which a temperature value of the lens (10) and a focus shift amount of the lens (10) are associated with each other, wherein
   the third detection unit (281) is configured to detect a focus shift amount of the lens (10) by referring to the table based on a temperature value obtained by converting the first resistance value by the conversion unit (243).

4. The imaging device (1a) according to any one of claims 1 to 3, wherein
   the first detection unit (246) is configured to detect the first resistance value in synchronization with an imaging timing of an imaging element that converts light emitted through the lens (10) into an electrical signal.

5. The imaging device (1a) according to claim 1, wherein
   the second detection unit (245) is configured to detect the second resistance value in synchronization with an imaging timing of an imaging element that converts light emitted through the lens (10) into an electrical signal.

6. The imaging device (1a) according to claim 1 or 5, wherein
   the position detection coil (32) is arranged to be wound around a region outside the drive coil (12) in a plane orthogonal to a direction in which the lens (10) is driven by the drive coil (12).

7. The imaging device (1a) according to claim 1 or 5, wherein
   the position detection (32) coil is arranged to be wound around a region including an inner side of the drive coil (12) in a plane orthogonal to a direction in which the lens (10) is driven by the drive coil (12).

8. A method for controlling an imaging device (1a), executed by a processor, the method comprising:

   a first detection step of detecting a first resistance value of a drive coil (12) included in an actuator (13) that is configured to drive a lens (10) collecting subject light;
   the method being **characterized in that** it further comprises
   a second detection step of detecting a second resistance value of a position detection coil (32) configured to detect the position of the lens (10); and
   a correction value generation step of generating a correction value for a position of the lens based on the first resistance value and the second resistance value.

**Patentansprüche**

1. Bildgebungsvorrichtung (1a), umfassend:

eine erste Erkennungseinheit (246), die konfiguriert ist, um einen ersten Widerstandswert einer Antriebsspule (12) zu erkennen, die in einem Aktuator (13) eingeschlossen ist, der konfiguriert ist, um eine Linse (10) anzutreiben, die Objektlicht sammelt;

eine Korrekturwerterzeugungseinheit (247), die konfiguriert ist, um einen Korrekturwert für eine Position der Linse (10) basierend auf dem ersten Widerstandswert zu erzeugen, und **dadurch gekennzeichnet, dass** sie ferner umfasst

eine zweite Erkennungseinheit (245), die konfiguriert ist, um einen zweiten Widerstandswert einer Positionserkennungsspule (32) zu erkennen, die konfiguriert ist, um die Position der Linse (10) zu erkennen, wobei die Korrekturwerterzeugungseinheit (247) konfiguriert ist, um den Korrekturwert basierend auf dem ersten Widerstandswert und dem zweiten Widerstandswert zu erzeugen.

2. Bildgebungsvorrichtung (1a) nach Anspruch 1, ferner umfassend

eine dritte Erkennungseinheit (281), die konfiguriert ist, um einen Fokusverschiebungsbetrag der Linse (10) basierend auf dem ersten Widerstandswert zu erkennen, wobei die Korrekturwerterzeugungseinheit (247) konfiguriert ist, um den Korrekturwert weiter unter Verwendung des von der dritten Erkennungseinheit (281) erkannten Fokusverschiebungsbetrags zu erzeugen.

3. Bildgebungsvorrichtung (1a) nach Anspruch 2, ferner umfassend:

eine Umwandlungseinheit (243), die konfiguriert ist, um den ersten Widerstandswert in einen Temperaturwert umzuwandeln; und

eine Speichereinheit (25), die konfiguriert ist, um eine Tabelle zu speichern, in der ein Temperaturwert der Linse (10) und ein Fokusverschiebungsbetrag der Linse (10) einander zugeordnet sind, wobei die dritte Erkennungseinheit (281) konfiguriert ist, um einen Fokusverschiebungsbetrag der Linse (10) durch Bezugnahme auf die Tabelle basierend auf einem Temperaturwert zu erkennen, der durch Umwandlung des ersten Widerstandswerts durch die Umwandlungseinheit (243) erhalten wird.

4. Bildgebungsvorrichtung (1a) nach einem der Ansprüche 1 bis 3, wobei die erste Erkennungseinheit (246) konfiguriert ist, um den ersten Widerstandswert synchron mit einem Bildgebungszeitpunkt eines Bildelements zu erkennen, das durch das Objektiv (10) emittiertes Licht in ein elektrisches Signal umwandelt.

5. Bildgebungsvorrichtung (1a) nach Anspruch 1, wobei die zweite Erkennungseinheit (245) konfiguriert ist, um den zweiten Widerstandswert synchron mit einem Bildgebungszeitpunkt eines Bildelements zu erkennen, das durch die Linse (10) emittiertes Licht in ein elektrisches Signal umwandelt.

6. Bildgebungsvorrichtung (1a) nach Anspruch 1 oder 5, wobei die Positionserkennungsspule (32) so angeordnet ist, dass sie um einen Bereich außerhalb der Antriebsspule (12) in einer Ebene orthogonal zu einer Richtung gewickelt ist, in der das Objektiv (10) von der Antriebsspule (12) angetrieben wird.

7. Bildgebungsvorrichtung (1a) nach Anspruch 1 oder 5, wobei die Spule zur Positionserkennung (32) so angeordnet ist, dass sie um einen Bereich gewickelt wird, der eine Innenseite der Antriebsspule (12) in einer Ebene orthogonal zu einer Richtung einschließt, in der die Linse (10) durch die Antriebsspule (12) angetrieben wird.

8. Verfahren zum Steuern einer Bildgebungsvorrichtung (1a), das von einem Prozessor ausgeführt wird, wobei das Verfahren umfasst:

einen ersten Erkennungsschritt zum Erkennen eines ersten Widerstandswerts einer Antriebsspule (12), die in einem Aktuator (13) eingeschlossen ist, der konfiguriert ist, um eine Linse (10) anzutreiben, die Objektlicht sammelt;

wobei das Verfahren **dadurch gekennzeichnet ist, dass** es ferner umfasst

einen zweiten Erkennungsschritt zum Erkennen eines zweiten Widerstandswertes einer Positionserkennungsspule (32), die zum Erkennen der Position der Linse (10) konfiguriert ist; und

einen Korrekturwerterzeugungsschritt zum Erzeugen eines Korrekturwerts für eine Position der Linse basierend auf dem ersten Widerstandswert und dem zweiten Widerstandswert.

**Revendications**

1. Dispositif d'imagerie (1a) comprenant :

   une première unité de détection (246) qui est configurée pour détecter une première valeur de résistance d'une bobine d'entraînement (12) incluse dans un actionneur (13) qui est configurée pour entraîner une lentille (10) collectant de la lumière de sujet ;
   une unité de génération de valeur de correction (247) qui est configurée pour générer une valeur de correction pour une position de la lentille (10) en fonction de la première valeur de résistance, et **caractérisé en ce qu'**il comprend en outre
   une deuxième unité de détection (245) qui est configurée pour détecter une seconde valeur de résistance d'une bobine de détection de position (32) configurée pour détecter la position de la lentille (10), dans lequel
   l'unité de génération de valeur de correction (247) est configurée pour générer la valeur de correction en fonction de la première valeur de résistance et de la seconde valeur de résistance.

2. Dispositif d'imagerie (1a) selon la revendication 1, comprenant en outre

   une troisième unité de détection (281) qui est configurée pour détecter une quantité de décalage de mise au point de la lentille (10) en fonction de la première valeur de résistance, dans lequel
   l'unité de génération de valeur de correction (247) est configurée pour générer la valeur de correction à l'aide en outre de la quantité de décalage de mise au point détectée par la troisième unité de détection (281).

3. Dispositif d'imagerie (1a) selon la revendication 2, comprenant en outre :

   une unité de conversion (243) qui est configurée pour convertir la première valeur de résistance en une valeur de température ; et
   une unité de stockage (25) qui est configurée pour stocker une table dans laquelle une valeur de température de la lentille (10) et une quantité de décalage de mise au point de la lentille (10) sont associées l'une à l'autre, dans lequel
   la troisième unité de détection (281) est configurée pour détecter une quantité de décalage de mise au point de la lentille (10) en se référant à la table en fonction d'une valeur de température obtenue par conversion de la première valeur de résistance par l'unité de conversion (243).

4. Dispositif d'imagerie (1a) selon l'une quelconque des revendications 1 à 3, dans lequel
   la première unité de détection (246) est configurée pour détecter la première valeur de résistance en synchronisation avec une temporisation d'imagerie d'un élément d'imagerie qui convertit de la lumière émise à travers la lentille (10) en un signal électrique.

5. Dispositif d'imagerie (1a) selon la revendication 1, dans lequel
   la seconde unité de détection (245) est configurée pour détecter la seconde valeur de résistance en synchronisation avec une temporisation d'imagerie d'un élément d'imagerie qui convertit de la lumière émise à travers la lentille (10) en un signal électrique.

6. Dispositif d'imagerie (1a) selon la revendication 1 ou 5, dans lequel
   la bobine de détection de position (32) est agencée pour être enroulée autour d'une région à l'extérieur de la bobine d'entraînement (12) dans un plan orthogonal à une direction dans laquelle la lentille (10) est entraînée par la bobine d'entraînement (12).

7. Dispositif d'imagerie (1a) selon la revendication 1 ou 5, dans lequel
   la bobine de détection de position (32) est agencée pour être enroulée autour d'une région comportant un côté interne de la bobine d'entraînement (12) dans un plan orthogonal à une direction dans laquelle la lentille (10) est entraînée par la bobine d'entraînement (12).

8. Procédé permettant de commander un dispositif d'imagerie (1a), exécuté par un processeur, le procédé comprenant :

une première étape de détection consistant à détecter une première valeur de résistance d'une bobine d'entraînement (12) incluse dans un actionneur (13) qui est configurée pour entraîner une lentille (10) collectant de la lumière de sujet ;

le procédé étant **caractérisé en ce qu'**il comprend en outre

une seconde étape de détection consistant à détecter une seconde valeur de résistance d'une bobine de détection de position (32) configurée pour détecter la position de la lentille (10) ; et

une étape de génération de valeur de correction consistant à générer une valeur de correction pour une position de la lentille en fonction de la première valeur de résistance et de la seconde valeur de résistance.

FIG.1

# FIG.2

# FIG.3

FIG.4

# FIG.5

# FIG.6

# FIG.7

VOLTAGE

TIME

VOLTAGE

142

143

TIME

# FIG.8

POSITION DETECTION AND CONTROL UNIT — 240

246 — AF COIL RESISTANCE DETECTION UNIT

243 — A/D CONVERSION UNIT

244 — AF CONTROL UNIT

245 — POSITION DETECTION COIL RESISTANCE DETECTION UNIT

247 — CORRECTION UNIT

248 — LENS POSITION CORRECTION VALUE STORAGE UNIT

$V_{pos}$

$R_{act}$

$R_{pos}$

$V_{pwm}$

$V_{pwm}, V_{pos}, R_{act}, R_{pos}$ $M(d)$

EP 4 009 102 B1

36

# FIG.9

# FIG.10

# FIG.11

START

OUTPUT PWM SIGNAL OF VOLTAGE $V_{pwm}$ — S10

MEASURE RESISTANCE VALUE $R_{act}$ OF AF COIL — S11

ACQUIRE VOLTAGE $V_{pos}$ AS DETECTION OUTPUT BY INDUCED ELECTROMOTIVE FORCE FROM POSITION DETECTION COIL — S12

MEASURE RESISTANCE VALUE $R_{pos}$ OF POSITION DETECTION COIL — S13

DETERMINE POSITION d OF LENS BASED ON $V_{pwm}$, $V_{pos}$, $R_{act}$, AND $R_{pos}$ — S14

CORRECT CURRENT LENS POSITION AND TARGET POSITION BASED ON OBTAINED POSITION d TO DRIVE AF COIL — S15

END

# FIG.12

EP 4 009 102 B1

## FIG.13A

## FIG.13B

EP 4 009 102 B1

# FIG.14

# FIG.15

FIG.16

# FIG.17A

# FIG.17B

# FIG.18

# FIG.19

POSITION DETECTION AND CONTROL UNIT 240'

282 — FOCUS SHIFT CORRECTION VALUE STORAGE UNIT

281 — FOCUS SHIFT AMOUNT ACQUISITION UNIT

280 — RESISTANCE/ TEMPERATURE CONVERSION UNIT

246 — AF COIL RESISTANCE DETECTION UNIT

$R_{act}$

249

12

32

241

242

243 — A/D CONVERSION UNIT

$V_{pos}$

244 — AF CONTROL UNIT

$V_{pwm}$

245 — POSITION DETECTION COIL RESISTANCE DETECTION UNIT

$R_{pos}$

$V_{pwm}, V_{pos}, R_{act}, R_{pos}$ $M(d)$

247' — CORRECTION UNIT

248 — LENS POSITION CORRECTION VALUE STORAGE UNIT

EP 4 009 102 B1

# FIG.20

# FIG.21

EP 4 009 102 B1

# FIG.22

# FIG.23

EP 4 009 102 B1

# FIG.24

CAMERA HEAD 11102

LENS UNIT 11401 → IMAGING UNIT 11402 → COMMUNICA-TION UNIT 11404

DRIVE UNIT 11403 ← CAMERA HEAD CONTROL UNIT 11405

11400

CCU 11201

IMAGE PROCESSOR 11412    COMMUNICA-TION UNIT 11411

CONTROL UNIT 11413

# FIG.25

INTEGRATED CONTROL UNIT

MICRO-COMPUTER — 12051

SOUND-IMAGE OUTPUT UNIT — 12052

IN-VEHICLE NETWORK I/F — 12053

12050

AUDIO SPEAKER — 12061

DISPLAY UNIT — 12062

INSTRUMENT PANEL — 12063

12000

12001

COMMUNICATION NETWORK

DRIVE SYSTEM CONTROL UNIT — 12010

BODY SYSTEM CONTROL UNIT — 12020

EXTERNAL VEHICLE INFORMATION DETECTION UNIT — 12030

INTERNAL VEHICLE INFORMATION DETECTION UNIT — 12040

IMAGING UNIT — 12031

DRIVER CONDITION DETECTION UNIT — 12041

EP 4 009 102 B1

# FIG.26

**REFERENCES CITED IN THE DESCRIPTION**

**Patent documents cited in the description**

- US 2019190412 A1
- US 2018252893 A1

- JP 2018189703 A